(19) Europäisches Patentamt / European Patent Office / Office européen des brevets

(11) **EP 4 332 547 A2**

(12) **EUROPEAN PATENT APPLICATION**

(43) Date of publication:
06.03.2024 Bulletin 2024/10

(51) International Patent Classification (IPC):
*G01N 15/10* (2024.01)

(21) Application number: 24151670.7

(22) Date of filing: **30.05.2013**

(52) Cooperative Patent Classification (CPC):
**G01N 15/1434; G01N 15/1436; G01N 15/1459; G02B 6/29365;** G01N 2015/1006; G01N 2015/144; G02B 6/4215; G02B 21/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 30.05.2012 US 201261653328 P
30.05.2012 US 201261653245 P
18.10.2012 US 201261715819 P
19.10.2012 US 201261715836 P
29.04.2013 US 201361816819 P

(62) Document number(s) of the earlier application(s) in accordance with Art. 76 EPC:
**13796734.5 / 2 861 956**

(71) Applicant: **Iris International, Inc.**
**Chatsworth, CA 91311 (US)**

(72) Inventor: **CHEN, Yong Qin**
**San Jose, CA, 95135 (US)**

(74) Representative: **Maiwald GmbH**
**Engineering**
**Elisenhof**
**Elisenstrasse 3**
**80335 München (DE)**

Remarks:
This application was filed on 12.01.2024 as a divisional application to the application mentioned under INID code 62.

(54) **FLOW CYTOMETER**

(57) The disclosed flow cytometer (40) includes; 1. a laser diode ("LD") based optical subsystem (50) for impinging a beam of light upon particles passing through a viewing zone; 2. a composite microscope objective (60) for gathering and imaging light scattered from or fluoresced by particles passing through the viewing zone; 3. a fluidic subsystem (70) for supplying a liquid sheath flow to the viewing zone; 4. a peristaltic pump (80) for injecting into the liquid sheath flow a liquid sample flow carrying particles that passes together with the liquid sheath flow through the viewing zone; 5. a multimode optical fiber (852) that receives scattered and fluoresced light from the viewing zone that the composite microscope objective (60) gathers and images; and 6. a wavelength division multiplexer (90) for optically separating into color bands light received via the optical fiber (852).

FIG. 1

EP 4 332 547 A2

**Description**

Technical Field

The present disclosures relate generally to the technical field of flow cytometry and, more particularly, to the structure and operation of an improved flow cytometer together with various individual subassemblies included therein.

Background Art

Flow cytometry is a biophysical technique employed in cell counting, sorting, biomarker detection and protein engineering. In flow cytometry, cells suspended in a stream of liquid pass through an electronic detection apparatus. Flow cytometry allows simultaneous multiparametric analysis of physical and/or chemical characteristics of up to thousands of cells per second.

Flow cytometry has various applications including in the fields of molecular biology, pathology, immunology, plant biology and marine biology. Flow cytometry also has broad application in medicine (especially in transplantation, hematology, tumor immunology and chemotherapy, prenatal diagnosis, genetics and sperm sorting for sex preselection).

In marine biology, the autofluorescent properties of photosynthetic plankton can be exploited by flow cytometry in characterizing abundance and community composition. In protein engineering, flow cytometry is used in conjunction with yeast display and bacterial display to identify cell surface-displayed protein variants with desired properties. A common variation of flow cytometry is physically sorting particles based on their properties thereby purifying a population of interest.

An entire flow cytometer system includes the following main components.

1. A flow cell through which a liquid stream, usually called a sheath flow, liquid or fluid, carries and hydrodynamically aligns cells or particles so that they pass single file through the flow cell.
2. A measuring subsystem system coupled to the flow cell that detects cells or particles passing through the flow cell and is usually either:

   a. an impedance or conductivity measuring subsystem; or
   b. an optical illumination subsystem together with an optical sensing subsystem.

3. A conversion subsystem for converting the output signal from the measuring subsystem into computer processable data.
4. A computer for analyzing the data produced by the conversion subsystem.

The optical illumination subsystems provides a collimated and then focused beam of light, usually laser light of a single wavelength, that impinges upon the hydrodynamically-focused stream of liquid passing through the flow cell. Accordingly, the flow cytometer system may have one or more light sources that may include:

1. one or more lamps, e.g. mercury or xenon;
2. one or more high-power water-cooled lasers, e.g. argon, krypton or dye laser;
3. one or more low-power air-cooled lasers, e.g. argon (488 nm), HeNe (red-633 nm), HeNe (green) and HeCd (UV); and/or
4. one or more diode lasers (blue, green, red and violet).

The optical sensing subsystem includes one or more detectors aimed where the focused liquid stream passes through the light beam. Such detectors may include:

1. detectors in line with the light beam (Forward Scatter or FSC);
2. detectors perpendicular to it (Side Scatter or SSC); and
3. fluorescence detectors.

Each suspended particle passing through the beam scatters the light, and fluorescent material present in the particle or attached to the particle excited by the impinging light emit light at a longer wavelength than that of the impinging light. Detecting and analyzing brightness changes in a combination of scattered and fluorescent light at each detector (one for each fluorescent emission peak) permits deriving various types of information about the physical and chemical structure of each individual particle. FSC correlates with cell volume. Due to light being scattered off of internal components within a cell, SSC depends on the inner complexity of the particle (i.e., shape of the nucleus, the amount and type of cytoplasmic granules or the membrane roughness). Some flow cytometers omit a fluorescence detector and detect only scattered light. Other flow cytometers form images of each cell's fluorescence, scattered light, and transmitted light.

The flow cytometer system's conversion subsystem, which may include one or more amplifiers which may be either linear or logarithmic, generally includes one or more Analogue-to-Digital Converters ("ADCs") for converting the measuring subsystem's output signal into data that is then processed by the computer.

Modern flow cytometers usually include up to four (4) lasers and numerous fluorescence detectors. Increasing the number of lasers and detectors permits labeling cells with several different antibodies, and can more precisely identify a target population by their phenotypic markers. Some instruments can even capture digital images of individual cells, allowing for the analysis of a fluorescent signal location within or on the surface of cells.

## Sample Illumination

In most of the instruments, particles of interest, such as blood cells or microspheres, are carried by the sheath flow using hydrodynamic focusing into a viewing zone inside a cuvette or jet stream and illuminated there by a focused laser beam. The technique provides the means to accurately identify and count particles of interest without being overwhelmed by background noise occurring outside a registration time window (Practical Flow Cytometry, Howard M. Shapiro, Wiley (2003) ISBN 0471411256). To increase detection sensitivity, the cross section of the focused laser beam is usually elliptical, with the minor axis along the direction of flow. In order to maintain the threshold integrity, the laser profile must have a smooth or bell shaped profile along the flow direction. One common method for producing such an beam is to elongate a nearly collimated circular Gaussian beam along the direction of flow with a beam expander made of either prism or cylindrical lens pair, then focus the beam down with a spherical lens. Since the shape of the beam at the focus is the spatial Fourier transform of the beam at far field, this produces a Gaussian shaped elliptical spot with, minor axis along the flow.

Conventional lasers are expensive, bulky and power hungry. More recently, laser diodes ("LD") have become available. Differing from conventional lasers, the new generation of LDs is cost effective, compact and power efficient, and shows great promise for new generation of compact biomedical instruments. A LD emits light having an elliptical cross-section with the ellipse's major axis, frequently called the fast axis, perpendicular to the LD's junction, and the ellipse's minor axis, frequently called the slow axis, parallel to the LD's junction. Unfortunately, the beam quality of a typical LD, particularly along its fast axis, leaves much to be desired, preventing its wide acceptance in flow cytometric applications.

In principle, the quality of the LD beam can be significantly improved by spatial filtering. If a small pinhole or a single mode optical fiber is positioned at the focal point of a lens, such that it only accepts the lowest order spatial mode, the beam passing through the pinhole or single mode optical fiber will be of nearly perfect Gaussian shape. United States Patent no. 5,788,927 discloses that such a beam can then be collimated and expanded in the direction of flow through the cytometer, and finally focused down to an elliptical shaped Gaussian beam with minor axis along the flow direction. Unfortunately, the size of desktop instrumentation limits the diameter of a pinhole to less than 5 micron. The core size of a visible wavelength single mode optical fiber also has a similar dimension. The challenge to manufacture such a precision spatial filter and maintain its long-term stability not only increases the cost of LD based laser system, but also reduces its reliability.

More recently, in an effort to reduce the possible side lobes due to the edge effect of limited numerical aperture of collimating lens, United States Patent no. 6,713,019 ("the '019 patent") discloses rotating the LD by ninety degrees (90°) such that its slow axis is parallel to the direction of flow. A beam diffusing section, such as a concave cylindrical lens, is then introduced to diffuse the collimated beam in the direction perpendicular to the flow, followed by a beam spot forming section, such as a spherical focusing lens, to form an elliptical spot within the cytometer's particle viewing zone. As described in detail in the '019 patent, the laser beam after the spot forming section is extremely astigmatic. In particular, the width of the beam at the viewing zone in the direction perpendicular to the flow is comparable or even wider than the width of the flow channel. This not only reduces the amount of laser energy impinging upon the particle and consequently the signal intensity, but also increases undesired background scattering from the liquid-flow cell interface. Instead of rotating the LD, United States Patent nos. 7,385,682 and 7,561,267 disclose using a large numerical aperture aspheric lens for LD collimation. Such a design, however, cannot correct the fringe effect inherent in the LD's beam profile. Consequently, there presently exists a need for a simple LD based optical system for use in flow cytometers that can reliably produce a focused elliptical beam with near Gaussian shape along its minor axis and a width along major axis.

**Viewing Zone**

**Microscope Objective**

Modern flow cytometers include a spatial filter, usually either a mechanical pinhole or a large core optical fiber, located at an image location of an objective lens to prevent undesired background light from entering the cytometer's detector(s) . Because particles remain in the cytometer's viewing zone for a few microseconds, microscope objectives with large numerical aperture must be used to maximize light collection efficiency. To support multiple spatially separated excitation laser beams in flow cytometers, as disclosed in United States Patent no.4,727,020, it is also desirable to use an objective with large field of view. In order to achieve these goals, United States Patent nos. 6,5100,07 and 7,110,192 disclose an objective design using modified apochromat with a gel-coupled or epoxy bonded near hemisphere lens as the optical element closest to the sample that is followed by multiple meniscus lenses. While such microscope objectives provide both a satisfactory numerical aperture and field of view, they significantly sacrificed image quality thereby:

1. limiting effective use of the spatial filter; and
2. exhibiting poor background light discrimination.

Further, such refractive microscope objectives are bulky, expensive to manufacture and often exhibit severe chromatic aberration. To overcome these limitations Published Patent Cooperation Treaty ("PCT") Patent Application no. WO 01/27590 discloses an alternative objective design based on a spherical concave mirror. The design offers large numerical aperture and good image quality along the optical axis. However, due to its poor off-axis characteristics, such a design is unsuitable for flow cytometers having multiple, spatially separated laser beams.

**Sheath Liquid Supply**

The performance of a flow cytometer depends critically on a stable liquid sheath flow. In particular, flow cytometers that have multiple spatially separated excitation laser beams or perform droplet sorting rely on a constant velocity of the liquid sheath flow for timing synchronization. As disclosed in United States Patent no. 5,245,318, conventional flow cytometers provide a stable liquid sheath flow by using an airtight fluidic system that either:

1. applies constant air pressure in a sheath liquid reservoir to push the fluid through the flow cell; or
2. by sucking the fluid from the sheath liquid reservoir through the flow cell using a vacuum pump.

These systems are bulky, expensive to manufacture and prone to failure. More recently, United States Patent no. 8,187,888 discloses including a sheath liquid subsystem that pumps the liquid sheath flow from the sheath liquid reservoir into the viewing zone and a waste sheath liquid pump that pumps waste sheath liquid from the viewing zone into the waste tank. Although it appears that the disclosed sheath liquid subsystem has never been used in velocity critical flow cytometers, this patent reports that the disclosed sheath liquid subsystem overcomes most of the drawbacks of conventional sheath liquid flow stabilization by:

1. damping pump pulsations by locating:

   a. one fluidic capacitor between the sheath liquid pump and the flow cell; and
   b. another fluidic capacitor between the flow cell and the waste pump; and

2. a pump controller whose operation is responsive to a pressure sensor that measures the pressure differential between the inlet and outlet of the flow cell.

The disclosed sheath liquid subsystem has other limitations. For example, the pressure sensor located near the outlet of the flow cell could be a potential source of contamination.

**Peristaltid Pump**

**Sample Liquid Supply**

Peristaltic pumps are volumetric pumps in which a set of linearly or circularly moving rollers progressively compresses a compressible tube to propel the fluid through the tube. Peristaltic pumps are widely used particularly to pump clean/sterile or aggressive fluids to avoid cross contamination with exposed pump components.

Conventional peristaltic pump exhibits a pulsation each time a roller rolls off the tube near the pump outlet, caused by the temporary increase of tube volume when the compressed tube expands back to its original shape. The pulsation is undesirable in applications that require smooth flow. Many attempts have been made in the past to reduce the pulsation. For example, United States Patent nos. 3,726,613 and 3,826,593 introduced a cam operated pusher which synchronously exerts an external pressure on the tube to compensate for the tube expansion. In United States Patent no. 4,834,630, a plurality of tubes mounted on segmented rollers are joined together at the pump inlet and outlet by T-shaped couplers such that pulsations from individual tubes would be reduced by averaging. United States Patent no. 7,645,127 proposed a pump tube with slightly larger inner diameter near the inlet so that the tube decompression near the pump outlet is compensated by the compression of a larger volume tube near the inlet. The various methods either significantly increased the complexity of the peristaltic pump or had limited success in reducing the pulsation effect.

## Mmulticolor Fluorescence Detection

In many multicolor fluorescence detection instrumentations, such as flow cytometers, (Practical Flow Cytometry, Howard M. Shapiro, Wiley (2003) ISBN 0471411256), the fluorescence light emitted from the object of interest is:

1. collected by a microscope objective;
2. reimaged through a small pinhole or a multimode optical fiber;
3. then collimated and separated into multiple colored bands; and
4. finally detected by photo detectors such as photomultiplier tube (PMT), PIN photodiode or avalanche photodiode (APD).

A PMT is essentially a special type of electron tube. This "pre-semiconductor age" device is bulky and expensive. In addition, it has poorer quantum efficiency and less reproducible spectral response than silicon based semiconductor detectors, particularly in the biologically important red to near infrared spectral region. Despite the disadvantages, PMT has excellent noise characteristics. For example, the dark current of a typical 13mm PMT (e.g., the R9305 from Hamamatsu Corporation of Japan) is only about 1nA. In contrast, an APD's dark current would be 10 times greater even if its active area were reduced to 1/20$^{th}$ of that of the PMT. As a result, PMT has been the de-facto low-level light detector in many commercial fluorescence detection flow cytometers. Only in certain scientific applications where event rate is low and dark current may be discriminated against by expensive photon-counting techniques that the PMT has been replaced by APD detectors. (c.f., High-Throughput Flow Cytometric DNA Fragment Sizing, A.V. Orden, R.A. Keller, and W. P.Ambrose, Anal. Chem., 2000, 72 (1), p 37-41). More recently, a Geiger mode APD array was also promoted as PMT replacement. (For example, the multipixel photon counter of Hamamatsu Photonics of Japan and the solid-state photomultiplier of SensL Inc. of Ireland.) These detectors, however, also have high dark current and are nonlinear at high event rate.

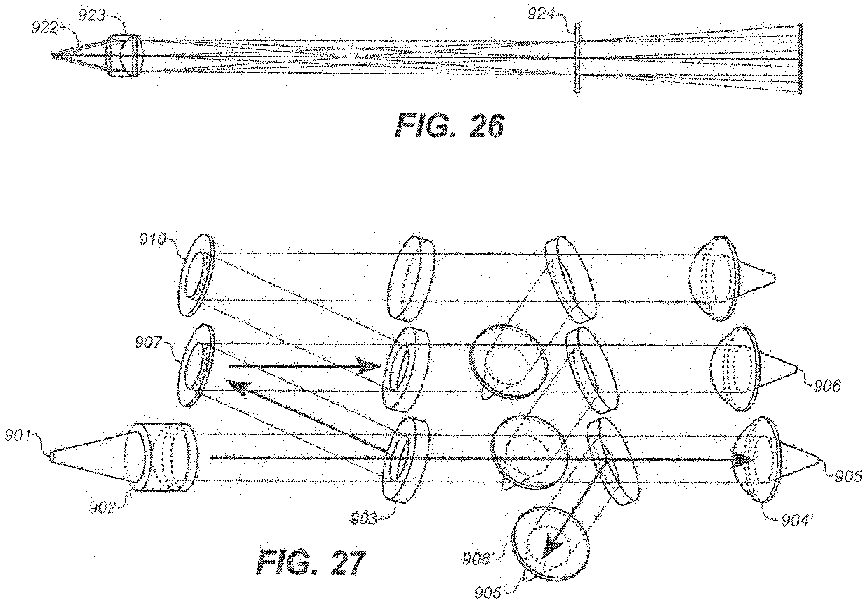

The only industry where APD has found wide acceptance is in optical communication. It is known that if the APD's active area is reduced to less than 1mm$^2$, the corresponding dark current will be reduced to the same level as a PMT. In optical communication, the light is a laser beam out of single mode optical fiber. Such a beam can be easily collimated then focused down to an area much smaller than 1mm$^2$. It should be noted that the color separation devices used in the fluorescence light detection instruments, as described in United States Patent no. 6,683,314 and references therein, are almost identical in function and architecture to the wavelength division multiplexers (WDM) widely used in optical communication, as described in United States Patent nos. 4,482,994, and 5,786,915. A fundamental reasons preventing the use of small area APD in fluorescence detection instrumentation is the well known theorem of etendue conservation: the fluorescence light coming through a pinhole or multimode optical fiber is an extended light source with an etendue hundreds of times greater than that of a laser beam out of a single mode optical fiber. Consequently, as illustrated in FIG. 26, it cannot be collimated over an extended distance unless the diameter of the beam is significantly expanded. Unfortunately, the larger the beam diameter, the greater the technical challenge to focus it down to a small spot. Since efficient color separation can only be accomplished economically with collimated light beam, small area APD has not been considered viable for multicolor fluorescence light detection applications. Clearly, a technology capable of collimating a large etendue light beam over an extended distance without significantly expanding the beam diameter would be highly desirable. Such a technology would enable a WDM like device for fluorescence light detection with characteristics comparable to low noise semiconductor detectors.

## Disclosure

The present disclosure provides an improved flow cytometer together with various improved components included therein.

It is an object of the present disclosure to provide a simple and reliable diode laser based optical system capable of delivering a focused laser beam of elliptical cross section with a Gaussian like intensity distribution along its minor axis and a width along major axis optimized for flow cytometric applications.

An object of the present disclosure is an imaging quality microscope objective that is easy to manufacture, has long working distance, large numerical aperture. large field of view and minimal chromatic aberration.

An object of the present disclosure ia a simple fluidics system for flow cytometers that is not only reliable, compact and easy to manufacture, but also capable of supporting velocity critical applications such as in instruments with multiple spatially separated excitation laser beams or in droplet sorters.

A object of the present disclosure is simple design for a peristaltic pumb can provide a pulseless liquid flow is highly desirable.

An object of the present disclosure to provide a peristaltic pump with minimal pulsation.

A object of the present disclosure to provide a peristaltic pump that is simple to manufacture and operate. an object of the present disclosure to provide a device capable of collimating a light beam from an extended light source over an extended distance without significantly expanding the said beam diameter. It is also an object of the present disclosure to provide a WDM system using the said device to separate the said light beam into multiple colored bands. Further, it is an object of the present disclosure to provide such a WDM system that is compatible with low noise semiconductor detectors. In addition, due to the diversity of fluorescent probes, it is an object of the present disclosure to provide such a WDM system that is reconfigurable.

Disclosed herein is a flow cytometer that includes:

1. a LD based optical subsystem for impinging a beam of light upon particles passing through a viewing zone;
2. a composite microscope objective for gathering and imaging light scattered from or fluoresced by particles passing through the viewing zone;
3. a fluidic subsystem for supplying a liquid sheath flow to the viewing zone;
4. a peristaltic pump for injecting into the liquid sheath flow a liquid sample flow carrying particles that passes together with the liquid sheath flow through the viewing zone;
5. a multimode optical fiber that receives scattered and fluoresced light from the viewing zone that the composite microscope objective gathers and images; and
6. a wavelength division multiplexer for optically separating into color bands light received via the optical fiber .

The LD based optical subsystem in accordance with the present disclosure for illuminating particles passing through the flow cytometer's viewing zone generally includes:

1. a laser diode oriented with its slow axis parallel to the direction of flow;
2. a collimating lens that converts the diverging beam from the LD into a collimated beam of elliptical shape with its major axis perpendicular to the flow;
3. a focusing lens system that reduces the laser beam at the viewing zone to an optimal width in the direction perpendicular to the flow; and
4. finally a high power cylindrical focusing element placed in the proximity of the viewing zone with its axis perpendicular to the direction of flow.

The high power cylindrical focusing element transposes the far field profile of the LD along its slow axis to its Fourier conjugate at the viewing zone along the direction of flow, while maintains the transverse beam profile, such that the laser beam profile at the viewing zone is optimal for flow cytometric applications.

The composite microscope objective in accordance with the present disclosure generally includes:

1. a concave spherical mirror;
2. a transparent aberration compensation plate

with the flow cytometer's a viewing zone being located between the mirror and the plate. Scatter and fluorescence light emitted from particles in the viewing zone is collected by the mirror and reflected back toward the compensation plate. Optical aberrations originating from the mirror are significantly reduced after light passes through the compensation plate. In one embodiment of the present disclosure, the viewing zone is located inside a flow cell provided by rectangular glass cuvette with a small rectangular channel through which a particle carrying liquid flows. The concave mirror is made of an optically transparent material, such as glass or optical quality plastics, of piano-convex shape with a highly-reflective coating on the convex side for internal reflection. The piano-side of the mirror is either gel-coupled or bonded to one side surface of the cuvette. The plano-aspheric compensation plate is made of a transparent material, such as glass or optical quality plastics, with the piano side gel-coupled or bonded to the opposite side of the cuvette. The piano-convex shaped mirror and the aspheric compensation plate may also be formed integrally with the cuvettte. In yet another embodiment of the present disclosure, the viewing zone is in a jet stream with both the concave mirror and the compensation plate being free standing from the viewing zone, and the mirror is preferably a front surface concave mirror.

The fluidic system in accordance with the present disclosure generally includes a sheath liquid reservoir from which a liquid pump draws sheath liquid. Sheath liquid then flows from the liquid pump to an inlet of a T-coupling. One outlet arm of the T-coupling connects to a bypass that returns a fraction of the pumped sheath liquid back to the sheath liquid reservoir with the returned sheath liquid flowing into air within the sheath liquid reservoir. A second outlet arm of the T-coupling connects to a sheath route that includes a reservoir capsule followed by a particle filter and then the flow cell. The sheath liquid exiting the flow cell then goes to the waste tank. The fluidic resistance along the bypass is designed to be lower than the fluidic resistance along the sheath route. Consequently, only a small. fraction of the sheath liquid goes through the flow cell. Note that typical sheath flow rate in flow cytometric applications is a few tens of milliliter per minute. The bypass therefore permits using higher flow rate liquid pumps that not only are much less expensive and more reliable, but also operates at higher pulsation frequency which is much easier to attenuate. Since the exit of the bypass route connects to air, it also serves as a large fludic capacitor for significantly reducing pulsation in sheath liquid flowing along the sheath route. During operation, the inlet portion of the filter cartridge is filled with air. Therefore, the filter cartridge also serves as a fluidic capacitor, for further reducing pulsation in the sheath liquid at the flow cell to negligible level. Due to the large fluidic resistance at the flow cell, the air trapped near the inlet of the filter cartridge becomes compressed. If the liquid pump is turned off, the compressed air in filter cartridge being pushed back towards the sheath liquid reservoir becomes stored in the reservoir capsule whose size is chosen to prevent the trapped air from reaching the T-coupling.

The peristaltic pump in accordance with the present disclosure generally includes a plurality of rollers located at the periphery of a rotor that moves the rollers circularly inside a housing's arcuate curved track and a compressible tub that the rollers compress against the track. In one embodiment of the present disclosure, the track of the peristaltic pump's housing has one recess so the compressible tube is progressively decompressed to full expansion then compressed to full closure every time one of the rollers moves past the recess. The location and shape of the recess maintains the total volume of liquid within the compressible tube from the recess to the pump's outlet substantially invariant. The effect of tube expansion as a roller moves past the pump's outlet is compensated by the tube compression when a different other roller immediately upstream of the pump outlet moves into the recess' compressing section. In another embodiment of the present disclosure, the track of the pump housing may contain a plurality of recesses, providing for a plurality of roller upstream of the pump outlet to progressively modify the tube compression in multiple sections along the compressible tube. The locations and shapes of the plurality of recesses are designed such that the modification of tube compression at these sections substantially compensates the effect due to the tube expansion near the pump outlet. In yet another embodiment of the present disclosure, the compressible tube is kept fully closed underneath the roller except in the inlet and exit sections. A variable speed motor is used to drive the pump. When a roller reaches the exit section, the motor's rotation programmatically speeds up to compensate for the tube's expansion.

The wavelength division multiplexer ("WDM") in accordance with the present disclosure generally includes at least two optical elements. The first optical element collimate a beam of light received from an extended light source, such as the light from a pinhole or from a multimode optical fiber. The first optical element magnifies the extended light source, for example, as defined by the pinhole, or the core of the multimode optical fiber, to an image having a size similar to the effective cross section of the first optical element thereby creating a collimated light beam between the first optical element and its image. A second optical element is positioned near the image, and relays the first optical element with unit magnification down the optical path. In this way the second optical element effectively doubles the collimated path length. Additional optical elements in the same 1:1 image relay configuration may also be included in the present disclosure to further extend the collimated optical path. The cascaded unit-magnification image relay architecture of the present disclosure provides a greatly extend the collimated optical path length without large beam expansion. As a result, WDM techniques well-established in the optical communication industry can be readily adapted for fluorescence light detection. In particular, multiple colored bands present in the beam of light can be separated using dichroic filters, located along the optical path with the separated light being tightly focused into small spots compatible with low noise semiconductor photodetectors.

In one embodiment of WDM, the first optical element is a lens and the second element is a concave mirror, although it is apparent to those skilled in the art that other types of refractive and/or reflective optical components may also be used to achieve the same design goal. Similar to its counterpart in optical communication, the optical path in the WDM of the present disclosure may be folded using dichroic filters. In one embodiment of the present disclosure, the light path is folded into a zig-zag configuration. Preferably, to facilitate the flow cytometer's reliable reconfiguration each dichroic filter is bonded to a mechanical holder having a reference surface that is optically parallel to the filter's reflective surface. As a result, all of the WDM's filters can be accurately positioned along the optical path by referencing the filter's holder against a common optical flat.

In another embodiment of the present disclosure, the collimated beam passing through the dichroic filter is further branched out into multiple colored bands using secondary dichroic filters. It is apparent to those skilled in the art that dichroic filters may be inserted anywhere along the long, narrow and collimated beam path afforded by the present disclosure's relay imaging to thereby permit delivering a tightly focused beam to photo detectors using a variety of optical configurations, such as the star configuration discussed in United States Patent no. 6,683,314, the branched configuration discussed in United States Patent no. 4,727,020 and other types of WDM optical configuration widely practiced in the optical communication industry. Instead of concave mirrors, the WDM may be replaced by curved dichroic filters to further increase the number of colored bands selected by the WDM.

These and other features, objects and advantages will be understood or apparent to those of ordinary skill in the art from the following detailed description of the preferred embodiment as illustrated in the various drawing figures.

Brief Description of Drawings

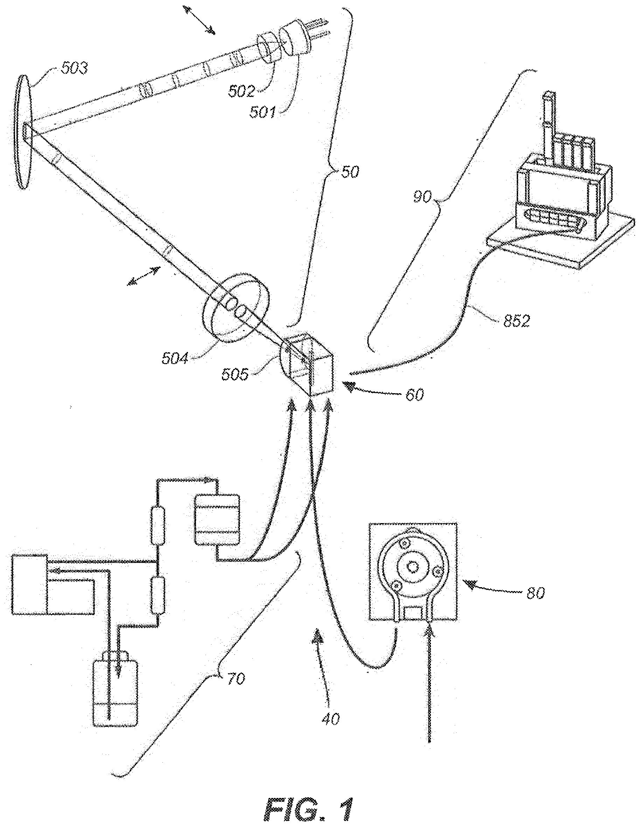

FIG. 1 is a diagram schematically illustrating a preferred embodiment of a flow cytometer in accordance with the present disclosure that includes:

a) a LD based optical illumination subsystem;
b) a composite microscope objective upon which light emitted from the LD based optical illumination subsystem impinges, the composite microscope objective having a fluid-passing channel formed therethrough with a particle illumination viewing zone located inside a cuvette thereof;
c) a fluidic system for supplying a pulsation free flow of sheath liquid to the fluid-passing channel formed through the composite microscope objective;
d) a peristaltic pump for introducing a pulsation free flow of sample liquid that carries cells or particles to be analyzed into the sheath flow of liquid supplied by the fluidic system; and
e) a wavelength division multiplexer ("WDM") having a zig-zag configuration for separating a beam of light into several different colored bands, the WDM receiving via an optical fiber light that is scattered from cells or particles as they pass through the composite microscope objective's fluid-passing channel and are illuminated therein by light emitted from the LD based optical illumination subsystem.

FIG. 2 is a schematic view depicting a typical high power edge emitting LD that illustrates the fast and slow axes of light emitted therefrom.

FIG. 2A shows a typical far field profile for a laser beam emitted from the LD chip depicted in FIG. 2.

FIG. 3A depicts a 3-dimensional view of a conventional, prior art LD based optical illumination subsystem for flow cytometric instruments together with the system's flow cell.

FIG. 3B depicts a typical time dependent profile of light scattering from a cell or particle passing through the laser beam depicted in FIG. 3A at the focus thereof within the system's flow cell.

FIG. 4A is an elevational view of an alternative prior art LD based optical illumination subsystem configuration across the liquid flowing through the fluid-passing channel that improves the beam profile at the focus thereof in the flow cytometer system's viewing zone.

FIG. 4B is a plan view along the liquid flowing through the fluid-passing channel of the alternative prior art LD based optical illumination subsystem depicted in FIG. 4A.

FIG. 5A is an elevational view across liquid flowing through the fluid-passing channel of the composite microscope objective depicted in FIG. 1 wherein the LD's slow axis oriented transversely to the liquid flow.

FIG. 5B is a plan view along liquid flowing through the fluid-passing channel of the composite microscope objective depicted in FIG. 1 wherein the LD's slow axis oriented transversely to the liquid flow.

FIG. 5C depicts a typical time dependent profile of light scattering from a cell or particle passing through the fluid-passing channel of the composite microscope objective depicted in FIG. 1.

FIG. 6 is a perspective view of an alternative embodiment of a LD based optical illumination subsystem in accordance with the present disclosure adapted for use in a flow cytometer system in which a jet stream of liquid passes through the viewing zone.

FIG. 6A is an enlarged perspective view of the alternative embodiment of a LD based optical illumination subsystem of depicting in greater detail the jet stream of liquid passes through the viewing zone.

FIG. 7 is a perspective view of an alternative embodiment LD based optical illumination subsystem in accordance with the present disclosure adapted for use in a flow cytometer system which orients the LD's slow axis parallel to the direction of liquid flowing through the fluid-passing channel of the composite microscope objective depicted in FIG. 1.

FIG. 8 is a perspective view of a composite microscope objective in accordance with the present disclosure adapted for use in the flow cytometer system depicted in FIG. 1, the composite microscope objective having a fluid-passing channel formed therethrough with the particle illumination viewing zone located inside a cuvette therein.

FIG. 9A is a cross-sectional elevational view of the composite microscope objective taken along the line 9A-9A in FIG. 8 that includes ray traces from three (3) spatially separated locations in the viewing zone to an image plane for the objective illustrating scatter and fluorescence emission propagation.

FIGs. 9B1-9B3 are spot diagrams near the image plane depicted in FIG. 9A for the three (3) spatially separated light emission locations depicted in FIG. 9A.

FIG. 10 is a cross-sectional elevational view similar to that of FIG. 9A for an alternative embodiment composite microscope objective in accordance with the present disclosure that includes ray traces from three (3) spatially separated locations in a viewing zone therein to an image plane for the objective illustrating scatter and fluorescence emission propagation.

FIG. 11 is a perspective view of yet another alternative embodiment a composite microscope objective in accordance with the present disclosure adapted for use in the flow cytometer system depicted in FIG. 1, the alternative embodiment composite microscope objective having a fluid-passing channel formed therethrough with the particle illumination viewing zone located inside a cuvette therein.

FIG. 12 is a perspective view of yet another alternative embodiment a composite microscope objective in accordance with the present disclosure adapted for use in the flow cytometer system depicted in FIG. 1, the alternative embodiment composite microscope objective being adapted for a viewing zone that is located inside the jet stream depicted in FIGs. 6 and 6A.

FIG. 13 is a perspective view of yet another alternative embodiment a composite microscope objective in accordance with the present disclosure adapted for use wherein a viewing zone is located on the surface of a microscope slide.

FIG. 14 is a schematic diagram depicting a fluidic subsystem in accordance with the present disclosure for supplying stable liquid sheath flow to a flow cytometers flow cell that includes:

    1. a small capsule located between a sheath liquid pump and the flow cell; and
    2. a particle filter located between the small capsule and the flow cell,

both the particle filter and the small capsule providing air reservoirs for dampening pump pulsations.

FIG. 15 is a schematic diagram depicting an alternative embodiment fluidic subsystem similar to that illustrated in FIG 14 that replaces the small capsule with a length of tubing for providing an air reservoir.

FIGs. 16A and 16B are histograms that compare measured particle flight times at the flow cell when the inlet portion of the particle filter has air trapped therein (FIG. 16A), and when there is no air within the fluidic subsystem between sheath liquid pump the and the flow cell (FIG. 16B).

FIG. 17 is a perspective view of a 3-roller peristaltic pump in accordance with the present disclosure depicting the pump's rollers, tube and surrounding pump housing.

FIGs. 18A through 18D depict simplified views for several states of the 3-roller peristaltic pump depicted in FIG. 17 with the rollers in different locations.

FIGs. 19 is a detailed longitudinal cross-sectional view of the peristaltic pump's tube being partially compressed by the pump's roller.

FIG. 19A and 19B are detailed cross-sectional views orthogonal to the peristaltic pump's tube's length taken along the lines 19A and 19B in FIG. 19 illustrating the tube's partial compression by the roller.

FIGs. 20A and 20B are schematic diagrams illustrating the pump's rollers and tube viewed along the pump's circular coordinates to depicting the pulseless provided by the peristaltic pump.

FIGs. 21 is graph depicting the functional relationship with respect to the roller position when it rolls off the exit section of the compressible tube of:

    1. the total volume of liquid in the exit half of the pump; as well as
    2. the liquid volumes in the pump's:

        a. recess section; and
        b. exit section.

FIGs. 22 is a simplified plan view of a 4-roller peristaltic pump in accordance with the present disclosure.

FIGs. 23 is a simplified plan view of a 6-roller peristaltic pump in accordance with the present disclosure.

FIG. 24A is a longitudinal cross-sectional illustration of rollers and a compressible tube for a pulsation minimizing 3-roller peristaltic pump in accordance with the present disclosure having a rotor with programmable speed.

FIG. 24B is simplified plan view illustrating the pulsation minimizing 3-roller peristaltic pump in accordance with the present disclosure having a rotor with programmable speed.

FIG. 24C is a graph depicting for the pulsation minimizing peristaltic pump depicted in FIG. 24B having a programmable speed rotor:

1. negative volume change rate with resect to the roller position;
2. rotor speed; and
3. pump flow rate.

FIG. 25 is a diagram illustrating optical ray tracing for an exemplary 6 port wavelength division multiplexer ("WDM") using zig-zag configuration in accordance with the present disclosure.

FIG. 26 is a diagram illustrating ray tracing of prior art collimating devices showing the device's limitation in collimating an extended light source.

FIG. 27 is a perspective illustration of an embodiment of a 6 ports WDM using a combination of zig-zag and branched configurations in accordance with the present disclosure.

FIG. 28 is a perspective illustration of another embodiment of a WDM having a concave dichroic filters in accordance with the present disclosure.

FIGs. 29A and 29B are perspective illustrations depicting assembly process for constructing replaceable dichroic filter assembly for an reconfigurable WDM in accordance with the present disclosure.

FIGs. 29C is a perspective illustration of a replaceable dichroic filter assembly build in accordance with the illustrations of FIGs. 29A and 29B.

FIGs. 30A and 30B are perspective illustrations of a WDM in accordance with the present disclosure depicting installing into the WDM the replaceable dichroic filter assembly depicted in FIG. 29C and its removal therefrom.

## Best Mode for Carrying Out the Disclosure

### Flow Cytometer

FIG. 1 depicts a flow cytometer in accordance with the present disclosure identified by the general reference number 40. The flow cytometer 40 includes:

1. a LD based optical subsystem 50;
2. a composite microscope objective 60;
3. a fluidic subsystem 70 for supplying a liquid sheath flow;
4. a peristaltic pump 80 for injecting a liquid sample flow that contains particles to be analyzed into the liquid sheath flow supplied by the fluidic subsystem 70, the liquid sample flow becoming hydrodynamically focused by the liquid sheath flow passes through a viewing zone with the composite microscope objective 60 gathering and imaging light scattered and/or fluoresced by particles in the viewing zone;
5. an optical fiber 852 that receives light scattered and/or fluoresced by particles in the viewing zone that the composite microscope objective 60 gathers and images; and
6. a wavelength division multiplexer 90 (" WDM 90") for optically processing scattered and/or fluoresced light received from the optical fiber 852.

### Optical Subsystem 50

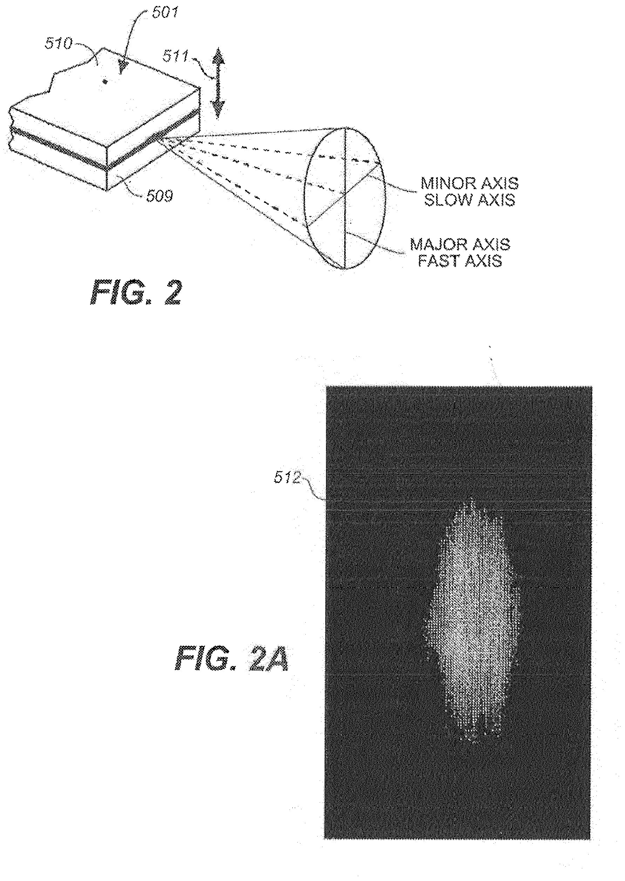

The optical subsystem 50 includes a LD 501 that, as depicted in greater detail in FIG. 2, emits a diverging beam of light from an edge thereof. As more graphically depicted in FIGs 2 and 2A, the diverging beam of light has an elliptically shaped cross-sectional profile with both a major axis, a.k.a. the fast axis, and a minor axis, a.k.a. the slow axis. The diverging beam of light emitted from the LD 501 impinges upon a collimating lens 502 which converts the diverging beam of light emitted by LD 501 into a collimated beam of light having an elliptical cross-section. Although not essential, the optical subsystem 50 may also include an optional mirror 503 positioned to direct the collimated elliptical beam of light towards the composite microscope objective 60. A piano convex lens 504, positioned near the composite microscope objective 60, reduces the major axis of the elliptically shaped beam of light that is oriented perpendicular to the direction in which the liquid sample and the surrounding liquid sheath flow through the viewing zone within the composite microscope objective 60. At the viewing zone, the width of the elliptically shaped beam of light:

1. perpendicular to the direction in which the liquid sample flow passes through the viewing zone is preferably slightly less than the width of the liquid sheath flow; while
2. still sufficiently wide so particles in the sample flow pass through a nearly flat portion of the elliptically shaped beam of light at the beam's maximum intensity.

In accordance with the present disclosure, it is apparent to those skilled in the art that the piano convex lens 504 may be replaced by other types of optical elements such as an achromatic doublet lens or combination of spherical lenses, cylindrical lenses, and/or prism pairs. Alternatively, the mirror 503 and the lens 504 may also be replaced by a concave mirror. For polarization sensitive applications of the flow cytometer 40, an optional polarization conditioning element, such as a half-wave plate, may also be placed in the collimated section of the beam of light extending from the collimating lens 502 to the lens 504. Finally, before passing through the viewing zone the beam of light passes through a high power cylindrical lens 505, positioned adjacent to the viewing zone. As depicted in FIG. 1, the axis of the cylindrical lens 505 is oriented perpendicular to the direction in which the liquid sample flow passes through the viewing zone, and the focal length of the cylindrical lens 505 produces a tight focusing of the beam of light's minor axis at the viewing zone.

An advantage of the optical subsystem 50 in comparison with conventional LD based optical subsystem may be discerned more clearly in FIGs. 2 and 2A. Most commercially available laser diodes suitable for use in a flow cytometer emit a beam of light from an edge thereof. As depicted in FIG. 2, a gain section 509 of such a LD chip 510 is highly confined in the transverse direction indicated by an arrow 511. Consequently, to achieve high output power LD manufacturers often sacrifice beam quality, particularly along the transverse or fast axis direction that is oriented parallel to the arrow 511. FIG. 2A shows this characteristic of light emitted from a LD wherein multiple fringes 512 due to gain confinement are clearly visible at the far field in the minor axis direction of the emitted beam of light. It should be noted that the fringes 512 appearing in the illustration of FIG. 2A contain only a minute amount of total energy in the beam of light, and therefore have little impact on the conventional M-square characterization of the corresponding beam profile. However, as discussed in greater detail below, the fringes 512 do have a detrimental effect on the performance of conventional flow cytometers. Alternatively, gain confinement along the slow axis direction of an edge emitting LD that is oriented perpendicular to the arrow 511 is much more relaxed. Consequently, as shown in FIG. 2A, the far field beam profile is much smoother along the slow axis of the LD's beam of light.

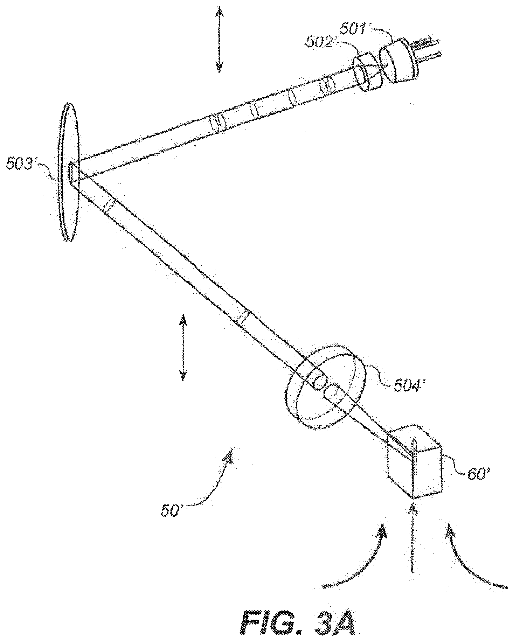

FIG. 3A depicts a conventional LD based optical subsystem for a flow cytometer. Those elements depicted in FIG. 3A that are common to the optical subsystem 50 illustrated in FIG. 1 carry the same reference numeral distinguished by a prime (') designation. As depicted in FIG. 3A, the conventional optical subsystem orients the fast axis of the LD 501 parallel to the direction in which the liquid sample flow passes through the viewing zone. In its most simplified configuration, the elliptical beam profile of the LD 501' is directly transposed by the spherical focusing lens 504' into the viewing zone. In an attempt to achieve optimal aspect ratio for the focused beam of light, various different conventional LD based optical subsystems have also included beam shaping optical elements in addition to those depicted in FIG. 3A

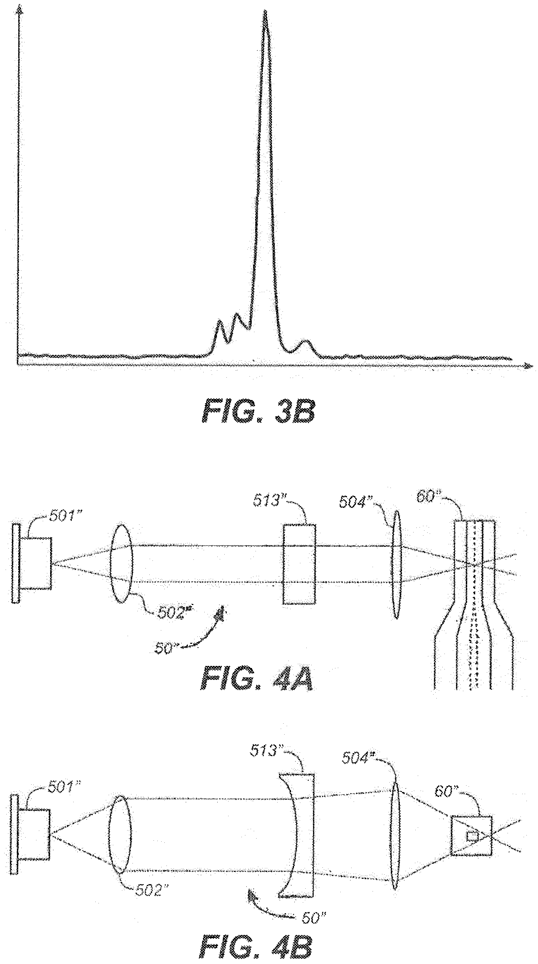

The detrimental effect of fringes 512 along the fast axis of the LD 501' for conventional optical subsystem configurations clearly appears in the light scattering time profile depicted in FIG. 3B. Since scattering or fluorescence intensity is directly proportional to the local laser power impinging upon a particle, any fine structure in the beam of light's profile along the direction in which the liquid sample flow passes through the viewing zone will appear in the time profile of the signal produced by the flow cytometer. Such structures in the time profile are indistinguishable from signals generated by small particles, and will therefore cause the flow cytometer to trigger falsely and misidentify particles. In addition, the fringes 512 will also lead to uncertainty in the measurement of other cytometric parameters, such as in the area and width of the pulse depicted in FIG. 3B.

FIGs. 4A and 4B depict a yet another prior art optical subsystem for LD based flow cytometric applications disclosed in the '019 patent identified previously. Those elements depicted in FIGs. 4A and 4B that are common to the optical subsystem 50 illustrated either in FIG. 1. or 3A carry the same reference numeral distinguished by a double prime (") designation. As depicted in FIGs. 4A and 4B, by orienting the slow axis of the LD 501" parallel to the direction in which the liquid sample flow passes through the viewing zone the optical subsystem depicted in FIGs.4A & 4B effectively overcomes the problem caused by the fringes 512 as described above. Unfortunately, the beam-diffusing element 513" placed before the spherical focusing lens 504" in FIGs. 4A and 4B to diffuse the beam of light perpendicular to the direction in which the liquid sample flow passes through the viewing zone produces a highly astigmatic beam of light near the viewing zone. Specifically, focusing this astigmatic beam of light at the viewing zone in the direction in which the liquid sample flow passes through the viewing zone increases the width of the beam of light perpendicular to the direction in which the liquid sample flow passes through the viewing zone so the beam's width become similar to or even wider than the sheath flow. Consequently, the optical subsystem depicted in FIGs. 4A and 4b not only diminished the amount of light energy impinging upon particles flowing through the viewing zone, the optical subsystem also increases undesirable scattering of light from the interface between the liquid sheath flow and adjacent parts of the composite microscope objective 60.

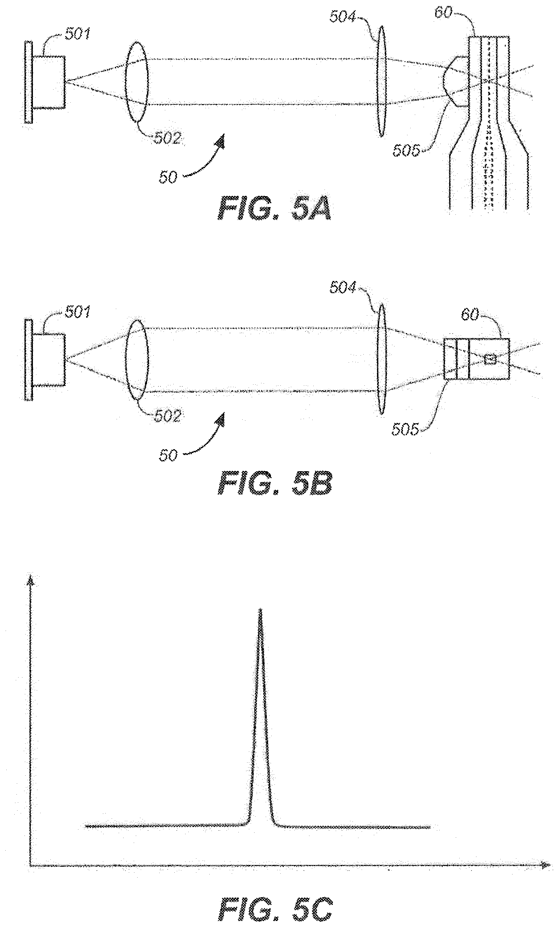

FIG. 5 highlights the main differences between the optical subsystem disclosed in the '019 patent and the optical subsystem 50 depicted in FIG. 1. Instead of placing an out-of-plane beam-diffusing element 513" before the spherical beam focusing lens 504 as shown in FIG. 4, the high power cylindrical cylindrical lens 505, depicted in FIGs. 5A and 5B as a cylindrical plano-convex lens, is placed along the beam of light after the spherical beam focusing lens 504 and is preferably juxtaposed with the composite microscope objective 60. As shown in FIGs. 5A and 5B, the cylindrical lens 505 focuses the minor axis of the beam of light in the viewing zone while leaving the major axis of the beam of light essentially unchanged. Consequently, the optical subsystem 50 depicted in FIGs. 1, 5A and 5B establishes a beam of light profile at the viewing zone which is elliptical with:

1. a tightly focused minor axis that spans across the combined liquid sample and sheath flows; and
2. a smooth minor axis profile in the direction of the combined liquid sample and sheath flows that is the Fourier conjugate of the far field beam profile along the slow axis of LD 501.

Meanwhile, as shown in FIG. 5B, the out-of-plane beam width is unaffected by the cylindrical lens 505. FIG. 5C shows a measured time profile of light scattered from a micro particle using the optical subsystem 50 depicted in FIGs. 1, 5A and 5B. The LD 501 used in making the measurement presented in FIG. 5C is the same as that used in generating the measured time profile of light scattered from a micro particle appearing in FIG. 3B. As shown in FIG. 5C, the side lobes caused by the fringes 512 along the fast axis of the LD 501 no longer have any material effect on performance of the flow cytometer 40.

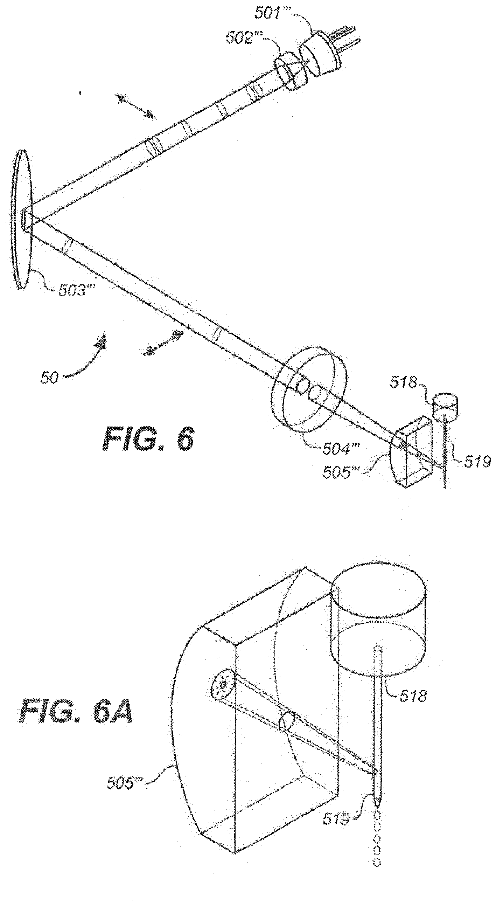

FIG. 6 depicts yet another alternative diode laser based optical subsystem in accordance with of the present disclosure adapted for use in a flow cytometer. Those elements depicted in FIGs. 6 and 6A that are common to the optical subsystem 50 illustrated in FIGs. 1, 5A and 5B carry the same reference numeral distinguished by a triple prime ('") designation. The optical subsystem 50'" depicted in FIGs. 6A and 6B is almost identical to that shown in FIGs. 1, 5A and 5B except that the viewing zone occurs without a composite microscope objective 60 because it occurs in a free-flowing jet stream 519 that includes both the sample and sheath flows that is emitted from a nozzle 518. Consequently, for the configuration of the optical subsystem 50'" depicted in FIGs. 6A and 6B the high power cylindrical lens 505 is detached from the viewing zone that is located within the jet stream 519.

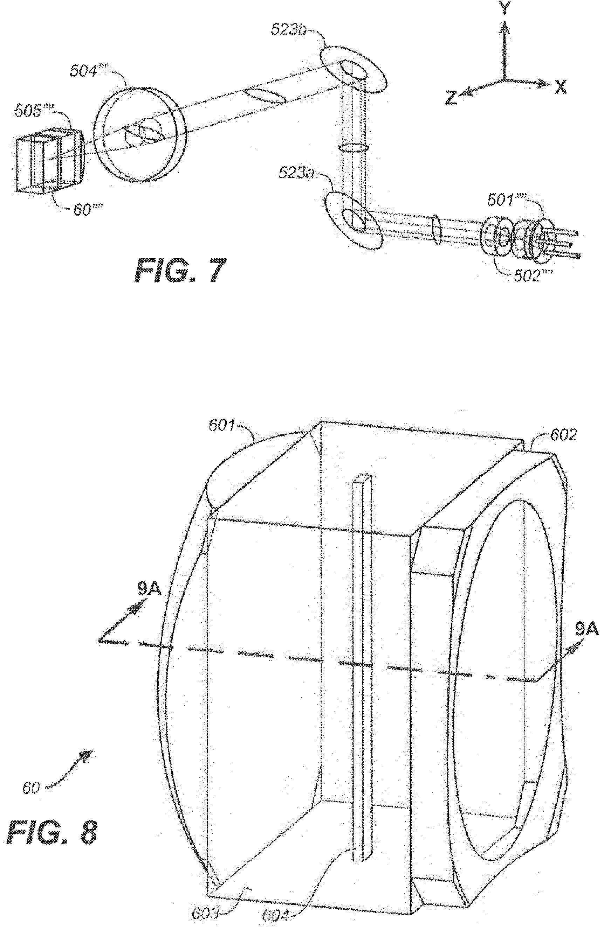

In the exemplary embodiments of the present disclosure depicted in FIGs. 1, 5A, 5B, 6A and 6B, the minor axis, i.e. the slow axis, of the LD 501 is oriented perpendicular to the direction in which the liquid sample flow passes through the viewing zone. However, it will be apparent to those skilled in the art that using an alternative optical configuration the major axis, i.e. the fast axis, of the LD 501 may be reoriented to be perpendicular to the direction in which the liquid sample flow passes through the viewing zone. FIG. 7 depicts one example of such an alternative configuration of optical elements. Those elements depicted in FIG.7 that are common to the optical subsystem 50 illustrated in FIGs. 1, 5A, 5B, 6A and 6B carry the same reference numeral distinguished by a quadruple prime (″″) designation. As shown, the slow axis of the LD 501″″ is oriented in the z-direction. The beam of light emitted from the LD 501″″ is then rotated to the in-plane y-direction by a pair of ninety degrees (90°) reflection mirrors 523a and 523b. In the illustration of FIG. 7, a normal to the first elliptically-shaped light beam reorienting mirror 523a is oriented in the x-y plane at forty-five degrees (45°) to the x-axis, and a normal to the second elliptically-shaped light beam reorienting mirror 523b is oriented in the y-z plane at forty-five degrees (45°) to the z-axis.

## Composite Microscope Objective 60

FIG. 8 depicts one embodiment in accordance with the present disclosure for the composite microscope objective 60 depicted in FIGs. 1, 5A, 5B and 7. As depicted in FIG. 8, the composite microscope objective 60 images a viewing zone that is located inside a prismatically-shaped glass cuvette 603 within a small flow channel 604, that preferably has a rectangular cross-sectional shape, through which passes the particle carrying combined liquid sample and sheath flows. A piano-concave back-surface mirror 601 included in the composite microscope objective 60 is made of an optically transparent material preferably having a refractive index similar to that of the glass cuvette 603, such as glass or optical quality plastics. To minimize optical loss, the back-surface mirror 601 includes a flat front surface that is optically coupled to an abutting flat surface of the prismatically-shaped cuvette 603. Optical coupling of the back-surface mirror 601 to the cuvette 603 may employ an index-matching gel, optical adhesive or direct optical bonding. Alternatively, the back-surface mirror 601 may also be formed integrally with the cuvette 603.

The composite microscope objective 60 also includes a plano-ashperic corrector plate 602 that is also made of an optically transparent material preferably having a refractive index similar to that of the glass cuvette 603, such as glass or optical quality plastics. To reduce optical loss, a flat surface of the corrector plate 602 may be optically coupled to an abutting flat surface of the prismatically-shaped cuvette 603 on a face thereof that is diametrically opposite to the back-surface mirror 601. Optical coupling of the corrector plate 602 to the cuvette 603 may employ an index-matching gel, optical adhesive or direct optical bonding. The aspheric surface of the corrector plate 602 furthest from the corrector plate 602 may carry an anti-reflective coating to reduce optical transmission loss, although such a coating is not a mandatory requirement for a composite microscope objective 60 in accordance with the present disclosure. The shape of the aspheric surface of the corrector plate 602 is similar to that in a classical Schmidt camera, (Schmidt, B., Mitt. Hamburg Sternwart 7 (36) 1932). As known by those skilled in the art, the corrector plate of a Schmidt camera includes a circularly shaped neutral zone where the corrector plate does not deviate rays of light passing through the plate. For use in the composite microscope objective 60, outside of the neutral zone of the corrector plate 602, where the plate thickness is thinnest, the corrector plate 602 has negative optical power while inside the neutral zone the corrector plate 602 has positive optical power. The exact shape of the aspheric corrector plate 602 may be readily obtained using any commercially available optical ray tracing tool by any person having ordinary skill in the art. Note that in the flow cytometer 40 the beam of light generated by the optical subsystem 50 depicted in FIGs. 1, 5A, 5B and 7 enters the cuvette 603 perpendicularly to the flow channel 604 through one (1) of the two (2) faces of the cuvette 603 that do not abut the back-surface mirror 601 or corrector plate 602.

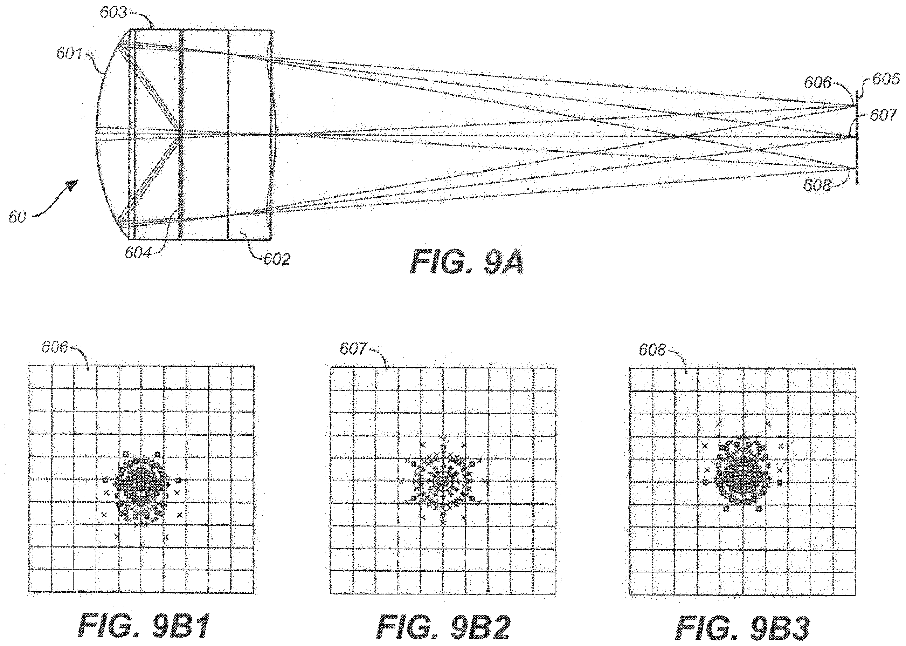

FIG. 9A depicts the result of ray tracing for the embodiment of composite microscope objective 60 illustrated in FIG. 8. As depicted in FIG. 9A, scatter and fluorescence emission from three (3) spatially separated locations in the flow channel 604 near the center of the cuvette 603:

1. initially propagate toward back-surface mirror 601 to be internally reflected by the back-surface mirror 601;
2. then pass first through the cuvette 603;
3. subsequently pass through the aspheric corrector plate 602; and
4. finally forms three (3) distinct images near an image plane 605.

Note that rays traversing the composite microscope composite microscope objective 60 depicted in FIG. 9A are nearly optically-uniform and that light emitted near the center of the cuvette 603 traverses the corrector plate 602 at near normal incidence. Consequently, the composite microscope objective 60 introduces very little chromatic dispersion in light emitted near the center of the cuvette 603.

Further, it is well known in the astrophysics community that Schmidt camera offers the unparalleled combination of a fast focal ratio and a large field of view with near diffraction limited optical performance. The principal drawback in a conventional Schmidt camera is that the image surface lies inside the instrument. For the composite microscope objective 60, light near the center of the cuvette 603 propagates opposite to that of a conventional Schmidt camera and therefore the image surface lies outside the composite microscope objective 60. Consequently, the present disclosure takes full advantage of the optical performance of the Schmidt camera without experiencing its limitation. FIGs. 9B1 through 9B3 depict spot diagrams near the image plane 605 for three (3) emission locations in viewing zone within the flow channel 604 that are separated 150 micron from each other. The diameters of all images depicted in FIGs. 9B1 through 9B3 are less than 35 microns.

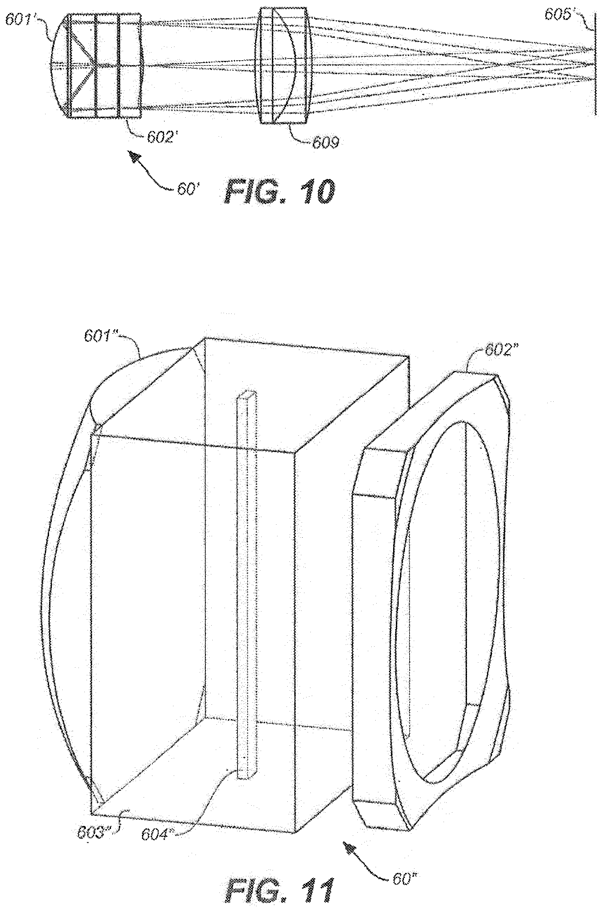

Light emitted from the viewing zone within the flow channel 604 of the composite microscope objective 60 depicted in FIGs. 8 and 9A that traverses the aspheric corrector plate 602 suffers from a small amount of chromatic aberration. FIG. 10 depicts an alternative embodiment for the composite microscope objective 60 depicted in FIGs. 1, 5A, 5B and 7 in accordance with the present disclosure. Those elements depicted in FIG. 10 that are common to the composite microscope objective 60 illustrated in FIGs. 8 and 9A carry the same reference numeral distinguished by a prime (') designation. The shapes of the back-surface mirror 601' and the aberration corrector plate 602' depicted in FIG. 10 are modified slightly to produce collimated afocal images of the emission locations near the viewing zone within the flow channel 604'. In FIG. 10 the composite microscope objective 60' also includes a chromatic compensating doublet lens 609 inserted between the corrector plate 602' and the image plane 605'. In addition to focusing the light emitted from the corrector plate 602' onto the image plane 605', the doublet lens 609 also serves to further reduce the residual chromatic aberration introduced by the aspheric corrector plate 602'.

It is not essential that the flat surface of the corrector plate 602 to be optically coupled to the cuvette 603. FIG. 11 depicts an alternative embodiment of the composite microscope objective 60 of the present disclosure. Those elements depicted in FIG. 11 that are common to the composite microscope objective 60 illustrated in FIGs. 8 and 9A carry the same reference numeral distinguished by a double prime (") designation. FIG. 11 depicts the aberration corrector plate 602" optically decoupled from the cuvette 603". Although not essential for operation of the composite microscope objective 60", to improve the light transmission efficiency both surfaces of the corrector plate 602" and the exposed flat surface of the cuvette 603" may carry an anti-reflectively coating. It is understood that the corrector plate 602" shown in FIG. 11 is held in fixed relationship to the combined back-surface mirror 601 and cuvette 603 by a mechanical support not depicted in FIG. 11. Similar to the composite microscope objective 60 and 60' depicted respectively in FIGs. 9A and 10, the composite microscope objective 60" with detached corrector plate 602" may be configured to provide either finite focal length image, or an afocal system which in turn is focused to a finite distance image plane by addition of the chromatic compensating doublet lens 609.

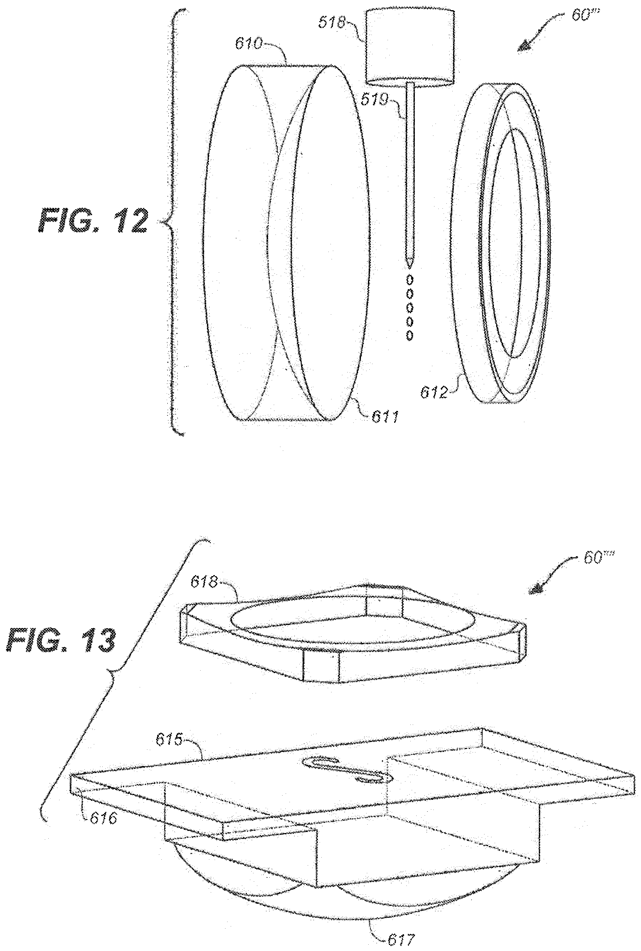

FIG. 12 depicts yet another alternative embodiment of the composite microscope objective 60. Those elements depicted in FIG. 12 that are common to the composite microscope objective 60 illustrated in FIGs. 8, 9A and 11 carry the same reference numeral distinguished by a triple prime ('") designation. The composite microscope objective 60'" depicted in FIG. 12 is adapted for collecting scatter and fluorescence emission from cells or other microscopic particles carried in the jet stream 519 emitted by the nozzle 518.. The composite microscope objective 60'" consists of a concave, spherically shaped, front surface mirror 610 and an aberration corrector plate 612. The front surface mirror 610 may be made of glass or other types of hard material with a highly reflective coating on the concave surface 611. or made of metal with polished concave surface 611. Similar to the corrector plate 602, the piano-aspheric corrector plate 612 is made of a thin piece of transparent material, such as glass or optical quality plastics. The aspheric surface may be formed on either side of the corrector plate 612. Preferably, both surfaces of the corrector plate 612 are coated with an anti-reflective coating to reduce optical transmission loss, although such a coating is not a mandatory requirement for a corrector plate 612 in accordance with the present disclosure. It is understood that the front surface mirror 610 and the corrector plate 612 are held in fixed relationship to each other by a mechanical support not depicted in FIG. 12. Scatter and fluorescence light emitted from cells or other types of microscopic particles in the viewing zone inside the jet stream 519 is reflected by the concave surface 611 of the front surface mirror 610. The aberration due to reflection from the concave surface 611 is corrected by the corrector plate 612 after light traverses through the corrector plate 612. It is understood by those having skill in the art that the composite microscope objective 60''' may be configured to provide either a finite-focused image similar to that depicted in FIG. 9A, or a collimated afocal image which is focused at finite distance from the composite microscope objective 60''' by a chromatic aberration correction doublet similar to the doublet lens 609 depicted in FIG. 10.

FIG. 13 depicts an adaptation of the composite microscope objective 60 for imaging specimens fixed to the surface of a transparent substrate such as a glass slide. Those elements depicted in FIG. 13 that are common to the composite microscope objective 60 illustrated in FIGs. 8, 9A and 11 carry the same reference numeral distinguished by a quadruple prime ('''') designation. The composite microscope objective 60'''' depicted in FIG. 13 includes two (2) optical elements, one a piano-concave back surface mirror 617 made of a transparent material such as glass or optical quality plastics, and an aberration corrector plate 618. As depicted in FIG. 13, the specimen to be imaged is fixed to a front surface 615 of a transparent, usually glass slide 616. The slide 616 is optically coupled, preferably using a thin layer of index matching fluid, to the flat surface of the back surface mirror 617. Scatter and fluorescence light emitted by the specimen:

    1. initially propagates through the slide 616 and the back surface mirror 617;
    2. is internally reflected by the back surface mirror 617 back through the slide 616;
    3. then through the corrector plate 618; and
    4. finally forms an image at an image plane that is located beyond the corrector plate 618.

**Fluidic Subsystem 70**

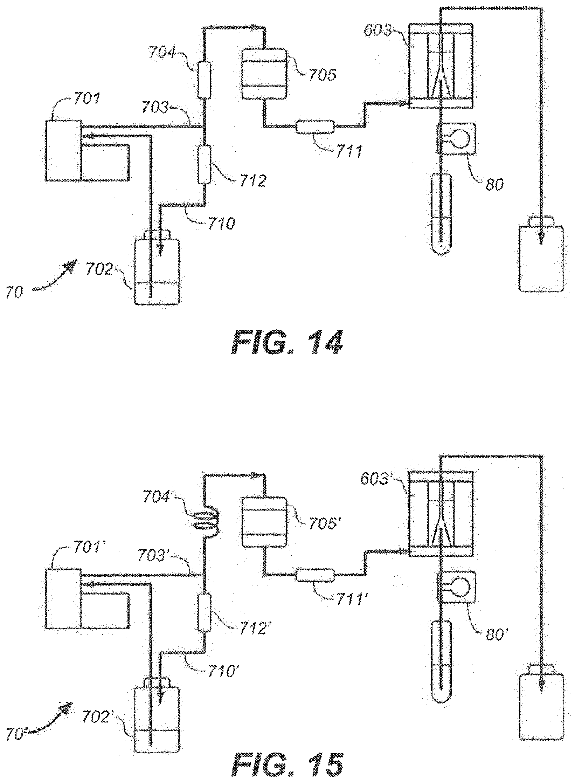

FIG. 15 depicts a fluidic subsystem 70 in accordance with the present disclosure that includes a sheath liquid reservoir 702 and a liquid pump 701 that draws sheath liquid from the sheath liquid reservoir 702. The liquid pump 701 may be a diaphragm pump, or a peristaltic pump, or a piston pump or any types of continuous fluid pump. An outlet of the liquid pump 701 connects to an inlet of a T-coupling 703 that receives sheath liquid from the liquid pump 701. The T-coupling 703 has two (2) outlets a first one of which connects to a bypass conduit 710 for returning a fraction of the sheath liquid received by the T-coupling 703 from the liquid pump 701 back to the sheath liquid reservoir 702. Returning a fraction of the sheath liquid received by the T-coupling 703 from the liquid pump 701 back to the sheath liquid reservoir 702 is advantageous for two (2) reasons.

    1. As depicted in FIG. 1, the bypass conduit 710 is left open to the surrounding atmosphere which effectively dampens pulsation to thereby significantly reducing the pulsation inherent in the operation of the liquid pump 701.
    2. Returning a fraction of the sheath liquid received by the T-coupling 703 from the liquid pump 701 back to the sheath liquid reservoir 702 also effectively reduces the throughput of the liquid pump 701 thereby allowing the use of comparatively high flow rate, low cost pumps in the flow cytometer 40.

Denote the flow resistance of the bypass conduit 710 as "r" and the flow resistance of path from the T-coupling 703 to the flow channel 604 of the cuvette 603 as "*R*." The output resistance to the sheath pump is then

$$R_p = \frac{rR}{r+R} \qquad\qquad (1)$$

Since $R \gg r$, the behavior of the liquid pump 701 is therefore dominated by the resistance of the bypass conduit 710 whose fluid dynamic properties are temperature insensitive. Thus, the configuration of the fluidic subsystem 70 depicted in FIG. 15 also provides a simple mechanism for achieving a temperature insensitive sheath liquid flow to the flow channel 604.

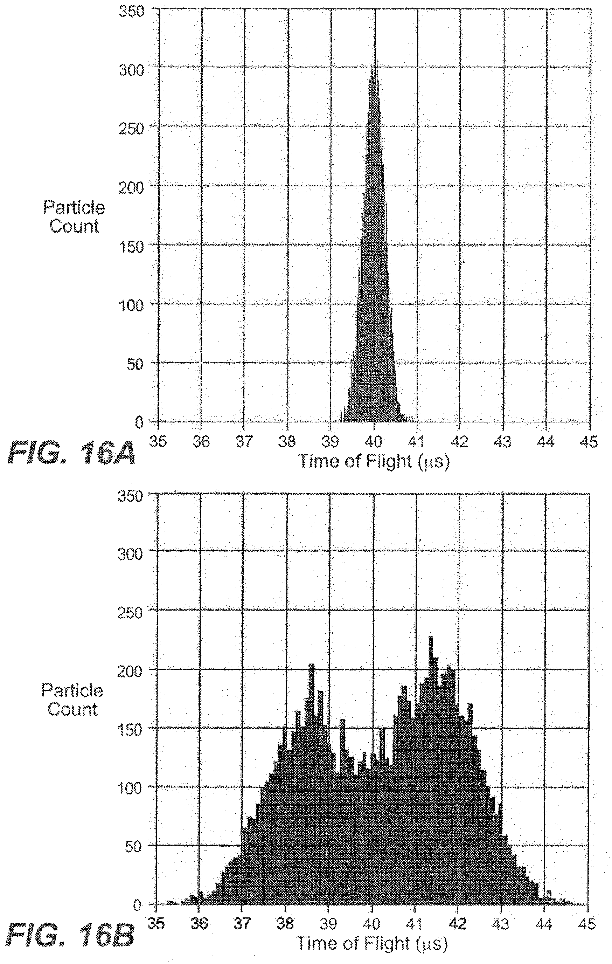

As depicted in FIG. 15, a second outlet of the T-coupling 703 connects to the to the flow channel 604 that extends through the cuvette 603 preferably first via a small reservoir capsule 704 and then via a filter cartridge 705. As depicted in FIG. 16, a piece of tubing 704' approximately 4 ft. long may be substituted for the small reservoir capsule 704. During initialization of the fluidic subsystem 70, some air becomes trapped in the filter cartridge 705 near its inlet which as depicted in FIG. 15 is located above an outlet of the filter cartridge 705. The air trapped in the filter cartridge 705 acts as an additional fluidic capacitor effectively reducing to negligible level the pulsation in sheath liquid emitted into the flow channel 604. Due to the large fluidic resistance at the flow channel 604, the air trapped inside the filter cartridge 705 becomes compressed. When the liquid pump 701 is turned off, a trapped in the filter cartridge 705 is pushed back towards the T-coupling 703 analogous to a discharging capacitor. Without the small reservoir capsule 704, some air ejected from the filter cartridge 705 reaches the bypass conduit 710 due to its low fluidic resistance, and will be pushed out of the fluidic subsystem 70 once the liquid pump 701 is turned on again. Without additional air supply, such a scenario will repeat until most of the air becomes purged from the fluidic subsystem 70 causing the filter cartridge 705 to lose its effectiveness as a pulsation damper. The purpose of the small reservoir capsule 704 or the piece of tubing 704' is therefore to provide a reservoir for isolating the filter cartridge 705 from the bypass conduit 710 ensuring that air trapped inside the filter cartridge 705 remains within the fluidic subsystem 70 despite repeated on-off operations of the liquid pump 701.

The pulsation damping effect of the trapped air near the inlet of the filter cartridge 705 is clearly evident in the histograms depicted in FIG. 16A and 16B. FIG. 16A depicts measured particle flight times at the flow channel 604 when a pocket of air is trapped near the inlet of the filter cartridge 705. FIG. 16B depicts measured particle flight times at the flow channel 604 when the trapped air is purged from the fluidic subsystem 70. The result depicted in the histograms of FIGs. 16A and 16B is made using two (2) knife edge shaped laser beams focused near the center of the flow channel 604 that are spaced approximately 200 micrometers apart. The horizontal axis of the FIGs. 16A and 16B is the flight time a particle takes from one laser beam to the other measured by recording the peak arrival time of light scattered from the particle at ninety degrees (90°) from the excitation beams. In both cases, the average flight time for particles to cross the two laser beams is the same. As shown in FIG. 16A, when the filter cartridge 705 retains some air, all particles take about the same amount of time to cross the two laser beams. If the filter cartridge 705 retains no air, as shown in FIG. 16B, the distribution of flight times not only broadens, but also becomes bimodal. In other words, some particles take less time while others take longer than average amount of time to cross the two laser beams, a phenomenon that can be easily attributed to sheath liquid velocity pulsation at the flow channel 604.

In the embodiments of the present disclosure discussed so far, the fluidic resistance along bypass conduit 710 as well as between the T-coupling 703 and the flow channel 604 is not adjustable. As should be apparent to those ordinary skilled in the art, flow restrictors such a fixed restrictor or adjustable valves 711, 711' and 712, 712' may be advantageously inserted in the bypass conduit 710 and between the T-coupling 703 and the flow channel 604 to permit adjusting the flow rate through the flow channel 604. Alternatively, the velocity of sheath liquid flowing through the flow channel 604 may also be adjusted using a liquid pump 701 that is driven by a variable speed brushless DC motor.

**Peristaltic Pump 80**

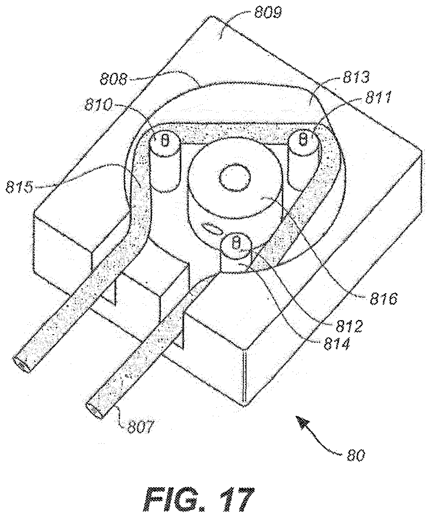

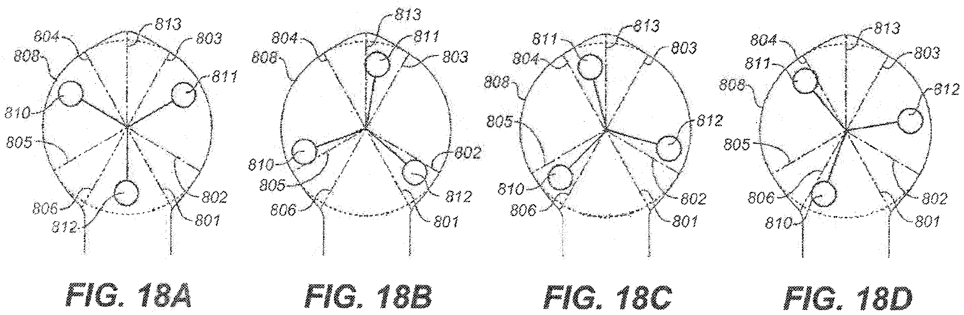

One embodiment of an peristaltic pump 80 in accordance with the present disclosure appears in FIG. 17. The pump includes a housing 809 with arcuate curved track 808, three rollers 810, 811 and 812 attached to a rotor 816 rotatable within the housing 809, and a compressible tube 807 sandwiched between the compressible tube 807 of the housing 809 and the rollers 810, 811 and 812. As depicted schematically in FIGs. 18A through 18D, the rollers 810, 811 and 812 of the peristaltic pump 80 are spaced at substantially equal angular distances, separations or spacings from each other around the perimeter of the rotor 816. For simplicity, it is assumed in the following discussions that the rotor 816 rotates counterclockwise, although it is to be understood that the discussions apply equally well to a peristaltic pump with clockwise rotating rotor. The compressible tube 807 of the housing 809 may be divided into several sections:

1. an open section between point 801 and point 806 where the experiences no compression;
2. a pump inlet section between point 801 and point 802 where the is progressively compressed until fully closed when a roller rolls over the section;
3. two pumping sections between point 802 and point 803, as well as between point 804 and point 805 wherein the is fully closed by the roller;
4. a recess section between point 803 and point 804 in which the progressively expands from fully closed to fully open as a roller rolls through the expansion part of the recess section from point 803 to point 813;
5. then the is progressively compressed to fully closed as a roller rolls through a compression part of the recess section from point 813 to point 804; and
6. the exit section between point 805 and point 806 where the progressively expands from fully closed to fully open as a roller rolls through the section.

In other words, when a roller rolls anticlockwise over the from inlet point 801 to outlet point 806, the inner gap of the

1. progressively decreases from fully open at point 801, to fully closed at point 802 and remain closed until point 803;
2. then progressively expands back to fully open at point 813;
3. then progressively decreases to fully closed at point 804, and remain closed until the roller reaches point 805; and
4. finally progressively expands back to fully open at point 806.

The size of the gap inside the is schematically illustrated in FIGs. 18A through 18D as the spacing between dashed circle and the solid compressible tube 807. As illustrated in FIGs. 18A through 18D, in this embodiment of the peristaltic pump 80 the angular distances, separations or spacings between points 801 and 803, points 802 and 813, point 813 and 805, as well as between point 804 and 866 are identical to the angle between adjacent rollers. As a result, when the roller 810 rolls through the pumping section from point 804 to point 805, as depicted in FIGs. 18A through 18B, its interaction with the completely determines the fluid flow rate of the peristaltic pump 80. Once the roller 810 reaches the exit section between point 805 and 806, as shown in FIG. 18C, the underneath the roller 810 starts to progressively expand and a gap starts to grow. Meanwhile, the roller 811 arrives at the compression part of the recess section and starts to progressively compress the . In the peristaltic pump 80, the shape of the compression part of the recess section between point 813 and point 804 along the compressible tube 807 is such that the volume of liquid pushed out by the compression of the underneath roller 811 in the compression part of the recess section between point 813 and point 804 substantially fills the volume created by the expansion underneath roller 810 in the exit section between point 5 and point 6. During this period, the compressible is partially open underneath both rollers 810 and 811 and completely closed underneath roller 12. Consequently, the pumping action in mainly delivered by roller 12. In particular, since by design the total volume of liquid in the section of the between point 13 and point 6 remains substantially constant during this period, the flow rate of the peristaltic pump 80 in the state shown in FIG. 18C remains substantially the same as that in the state shown in FIGs. 18A and 18B. Once the roller 810 passes point 806, roller 811 reaches the pumping section between point 804 and point 805. Note there is no physical difference between the rollers 810, 811 and 812, the flow rate of the peristaltic pump 80 therefore remains substantially constant throughout the entire process.

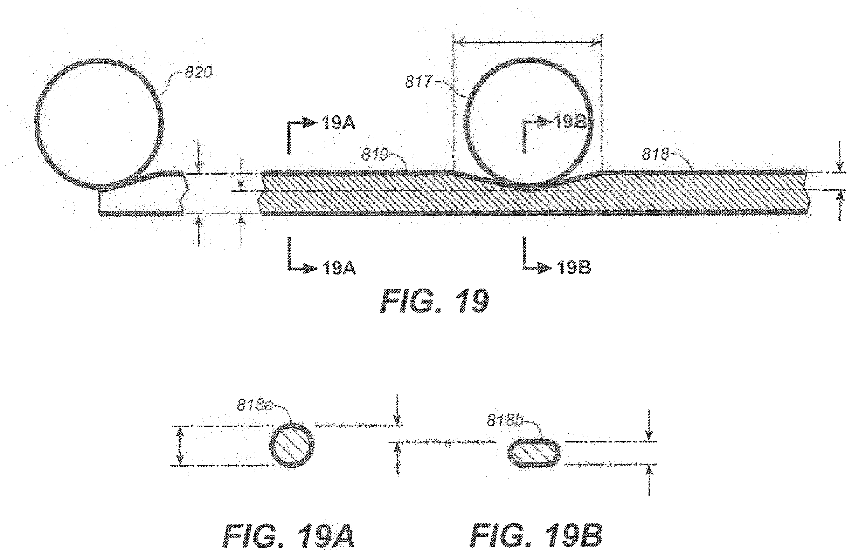

The mechanism of the pulseless peristaltic pump of the present disclosure may be understood more clearly if it is viewed along a circular coordinate following the movement of the rollers. Referring to FIG. 19, denote as V the volume of the fluid inside a compressible tube 819 from the outlet to a nearest roller 820 that closes off the compressible tube 819, i.e., the amount of fluid represented by the hatched area 818 hatched area 818 shown in FIG. 19. Clearly, $V$ depends on the angular position, $\theta$, of the roller 20, as well as $\delta$, the amount of tube compression exerted by all other downstream rollers.

$$V = V(\theta, \delta_1, \delta_2, \ldots) \qquad\qquad (1)$$

Consequently, the flow rate, F, of a peristaltic pump is related to the time derivative of $V_c$ by:

$$-F = \frac{dV}{dt} = \frac{\partial V}{\partial \theta} R + \sum_i \frac{\partial V}{\partial \delta_i} \frac{d\delta_i}{dt} \qquad\qquad (2)$$

Here $R$ is the rotational speed of the rotor and the subscripts are used to identify multiple downstream rollers. The first term on the right hand side of Eqn. (2) represents the contribution from the roller that closes off the tube. The partial derivative $\frac{\partial V}{\partial \theta}$ is therefore independent of $\theta$. The summation term represents contributions from all other downstream rollers partially compressing the compressible tube 819. Now let $\Delta S$ be the cross sectional area change due to the compression of the compressible tube 819 by the , and L the length of tube where its cross sectional shape is affected by the tube compression. Then, it is obvious to a person skilled in the art that L is proportional to the tube compression $\delta$, and $\Delta S$ proportional to its square, $\delta^2$. Consequently, $\Delta V$, the volume of fluid lost due to the compression of the tube by the roller, follows Eqn. (3):

$$\Delta V \propto L \cdot \Delta S \propto \delta^3 = (D - G)^3 \qquad\qquad (3)$$

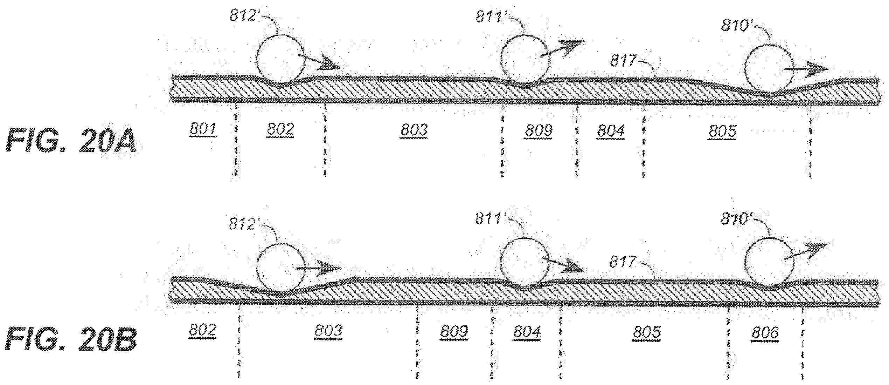

where D is the inner diameter of the compressible tube and G the minimum gap indicated in FIGs. 19, 19A and 19B which is also represented in FIGs. 18A through 18D by the spacing between the dashed circle and the solid compressible tube 807 of the housing 809. Now referring to FIGS. 20A AND 20B, in the circular coordinate system FIG. 20A corresponds to the state of pump shown in FIGs. 18A and 18B. During this period, there is no roller downstream of the roller 810' and the summation term in Eqn. (2) vanishes. FIG. 20B corresponds to the state of the pump shown in FIG. 18C. The is closed off by roller 12' and partially compressed by the rollers 810' and 811'. However, volumetric changes introduced by the two rollers 810' and 811' substantially cancel each other. Consequently, the summation term is Eqn.(2) vanishes as well. As a result, the flow rate of the peristaltic pump 80 remains substantially constant regardless of roller positions.

The shape of the compressible tube 807 satisfying the above requirement can be readily derived from Eqn. (3). Referring to FIG. 18C, if the gaps of the arcuate compressible tube 807 in the compression part of the recess section between point 813 and point 804, $G_{13,4}$, and in the exit section between point 805 and point 806, $G_{5,6}$, follow the equation

$$\left(D - G_{13,4}\right)^3 + \left(D - G_{5,6}\right)^3 = D^3 \tag{4}$$

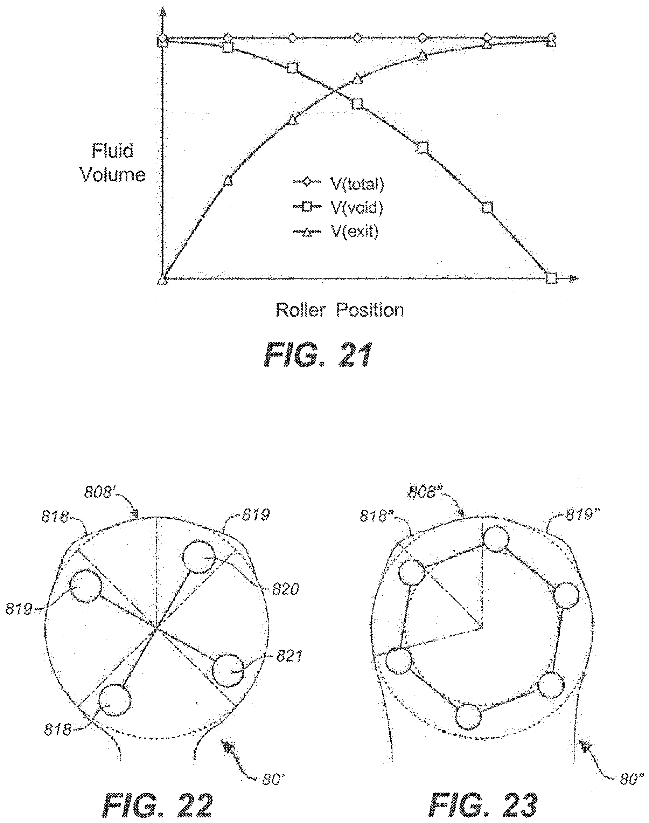

then the total fluid volume in the two sections remains substantially constant, as shown in FIG. 21. In the peristaltic pump 80, the shape of the pump housing 809 is symmetrical with respect to its center line, such that the entrance half of the pump housing 809 is the mirror image of the exit half of the housing 809, as shown in FIG. 17. The peristaltic pump 80 can therefore be operated both in counterclockwise and clockwise rotation very little pulsation, although it is understood that the symmetry is not required to realize a pulseless peristaltic pump in accordance with the present disclosure. For example, as long as the gaps of the arcuate compressible tube 807 in the section between point 13 and point 3, $G_{13,3}$, and in the section between point 2 and point 1, $G_{2,1}$, follow Eqn. (5),

$$\left(D - G_{13,3}\right)^3 + \left(D - G_{2,1}\right)^3 = D^3 \tag{5}$$

a peristaltic pump in accordance with the present disclosure will exhibit little pulsation when the rotor 816 rotates clockwise.

FIG. 22 depicts an alternative embodiment of a peristaltic pump in accordance with the present disclosure. Those elements depicted in FIG. 22 that are common to the peristaltic pump 80 illustrated in FIG. 17 carry the same reference numeral distinguished by a prime (') designation. The peristaltic pump 80' includes a compressible tube 807' having two (2) recesses 820 and 821, and four (4) rollers 822, 823, 824 and 825. In the embodiment depicted in FIG. 22, the fluid volume loss due to the tube expansion near the outlet of the pump is compensated by the combined effect of the compression of the compressible tube by rollers 822 and 823 near the two recesses 820 and 821.

FIG. 23 depicts yet another alternative embodiment of a peristaltic pump in accordance with the present disclosure. Those elements depicted in FIG. 23 that are common to the peristaltic pump 80 illustrated in FIG. 17 and the peristaltic pump 80' illustrated in FIG. 22 carry the same reference numeral distinguished by a double prime (") designation. The peristaltic pump 80" includes six (6) rollers and an arcuate compressible tube 807" having two recesses 818" and 819". In the peristaltic pump 80", the fluid volume loss due to the tube expansion near the outlet of the pump is compensated by the action of the roller immediately upstream of the one recess 818" or 819" near the pump outlet.

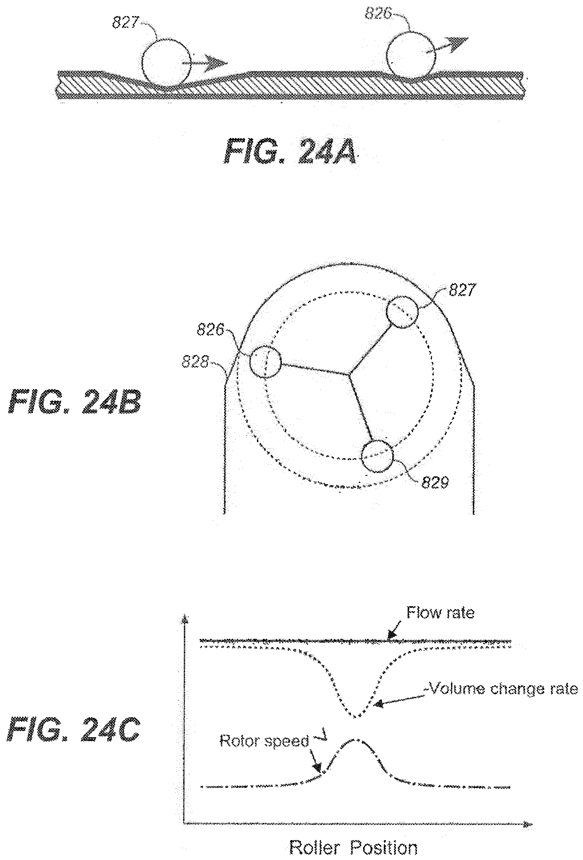

Pulsation due to the expansion of a compressed compressible tube near the outlet of a peristaltic pump may also be overcome by a peristaltic pump having a programmable rotor speed. FIGs. 24A through 24C illustrate pertinent aspects of an alternative embodiment mechanism for minimizing peristaltic pump pulsation in accordance with the present disclosure for a 3-roller peristaltic pump. As depicted in FIG. 24B, the track 828 is substantially circular between the pump inlet and pump exit section. Consequently, as indicated by the spacing between the dashed circle 829 and the solid curve of the track 828 the compressible tube is completely closed by various ones of the pump's three (3) rollers 826, 827 and 829 between the pump inlet and pump outlet. FIG. 24A illustrates schematically in a circular coordinate system the roller positions for the peristaltic pump depicted in FIG. 24B. Since there is only one roller downstream of the one that closes off the tube, Eqn. (2) is much simplified:

$$-F = R\left(\frac{\partial V_c}{\partial \theta} + \frac{\partial V_c}{\partial \delta}\frac{d\delta}{d\theta}\right) \tag{6}$$

Here the tube compression $\delta(\theta)$ is explicitly expressed as a function of roller position $\theta$. The terms inside the parentheses represent the change rate of fluid volume with respect to roller position. The first term is the contribution from the roller that closes off the tube, i.e., roller 827 in FIG. 24A, and the second term the contribution from the roller in the exit section. Note that by definition, the volume change rate is negative and the second term inside the parentheses vanishes when there is no roller in the exit section. The dotted curve in FIG. 24C is a representative plot of the negative volume change rate with respect to the position of the roller. The bump along the curve, due to the tube expansion when a roller rolls off the tube near the pump outlet, is the cause for pulsation in conventional peristaltic pumps having a constant rotor speed. However, for the peristaltic pump depicted in FIGs. 24A through 24C the rotor speed, R, shown as dashed curve in FIG. 24C, is set to vary in synchronism with the rotor position and inversely proportional to the change rate of the fluid volume. Consequently, the flow rate of the pump, which is the product of the rotor speed and the change rate of the fluid volume, remains constant, as indicated by the solid line at the top of FIG. 24C. Note the terms inside the parentheses of Eqn. (6) are uniquely determined by the mechanical structure of the pump. The rotor speed profile can therefore be readily generated from the shape of the track 828 in accordance with Eqn. (3). To those skilled in the art, there are many ways to realize a programmable rotor, for example, with stepping motor or DC servo motor.

## WDM Device 90

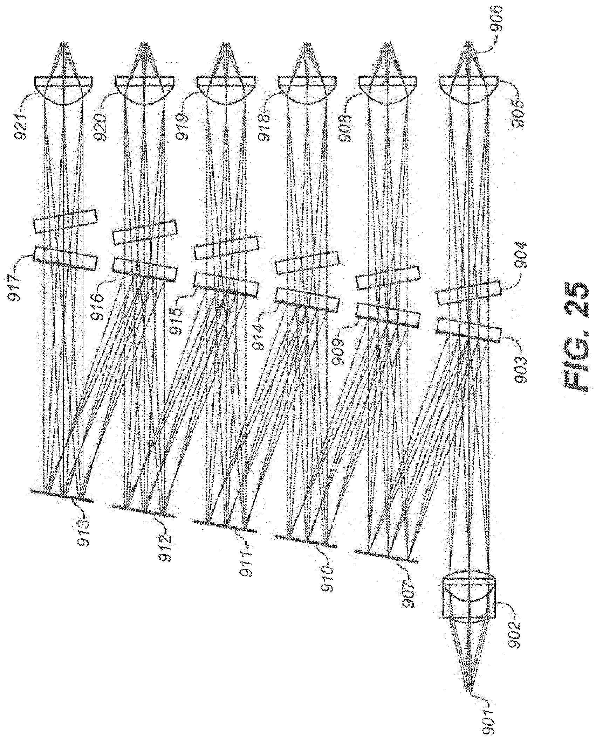

FIG. 25 shows the optical ray trace for an exemplary 6 ports wavelength division multiplexer of the present disclosure using zig-zag configuration. As shown in FIG. 25, fluorescence light going through a pinhole or emitted from the facet of a multimode optical fiber, such as the optical fiber 852 depicted in FIG. 1, forms an extended object or light source at location 901, i.e. the optical input of the WDM 90. The size of the object is defined by the diameter of the pinhole or the core diameter of the multimode optical fiber. Note that the practical size of the pinhole or the core diameter of the multimode optical fiber is measured in millimeters, in contrast to the diameter of single mode optical fibers that are measured in micrometers. Consequently, the etendue of the fluorescence light source, defined as the product of beam size and its divergence angle, is hundreds times greater than its counterpart in optical communication. According to the theorem of the conservation of etendue (Julio Chaves, Introduction to Nonimaging Optics, CRC Press, 2008 [ISBN 978-1420054293]), light from such an extended source, similar to that from a flash light, can only be kept collimated for a very limited distance, particularly when the diameter of the collimated portion needs to be small.

As depicted in FIG. 25, a collimating optical element, in this case an achromatic doublet lens 902, captures the light from source 901, and projects a magnified image of the object near a final focusing lens 905. The size of the image near 905 is kept approximately the same as the effective size of the collimating optical element 902. Consequently, beam of light propagating between lens 902 and the lens 905 is effectively collimated. As shown in FIG. 25, so long as the magnification factor is kept small, for example, less than around 10, using a simple singlet lens 905 the collimated beam of light can readily focused down to a spot smaller than that of the beam of light received by the WDM 90 at location 901. The ability to focus the beam of light down to such a small size permits placing a small area semiconductor detector at a focal point 906 of the focusing lens 905 for efficient photo detection.

A dichroic filter 903, oriented at a slanted angle, is inserted into the optical path approximately midway between the collimating optical element 902 and the lens 905. The dichroic filter 903 passes the color band of interest and reflects the remaining colors in the beam of light for further processing within the WDM 90. An optional band pass filter 904 may be inserted following the dichroic filter 903 to further improve the color isolation capability of the WDM 90.

Light reflected from the dichroic filter 903 impinges upon a second optical element 907, preferably a concave mirror. The concave mirror 907 has a radius of curvature approximately equal to the distance between the collimating optical element 902 and the image near focusing lens 905. The concave mirror 907 therefore creates a second image of the collimating lens 902 near a second focusing lens 908. The light beam between the concave mirror 907 and the second image at the lens 908 has substantially the same diameter as the beam of light between the collimating lens 902 and the first image near the focusing lens 905. The relay imaging concave mirror 907 therefore effectively doubles the collimated beam path without expanding the beam's diameter. Again, the extended yet collimated beam can be easily focused down to a spot smaller than that of the light source at 901. A second dichroic filter 909 is then inserted approximately midway between the relay imaging concave mirror 790 and the second image near focusing lens 908. The second dichroic filter 909 passes another band of color in the beam of light received by the WDM 90 at location 901 and reflects the remainder of the impinging beam of light for further processing.

As shown in FIG. 25, additional relay collimating optical elements 910, 911, 912, 913 and dichroic filters 914, 915, 916, 917 can be cascaded in the same way to produce multiple images near focusing lenses 918, 919, 920 and 921, each of these images corresponding to a specific color band of light received by the WDM 90 at location 1. As shown in FIG. 25, due to the present disclosure's 1:1 imaging relay architecture, the spots of light produced by focusing lenses 906, 908, 918, 919, 920 and 921 are all smaller than the source of the beam of light, and therefore can be easily captured by small area APD's.

Although FIG 25 illustrates a 6-port wavelength division multiplexer for a beam of light from the extended light source, it is readily apparent to those skilled in the art that WDM's having different numbers of ports can be easily built in accordance with the present disclosure. It is also apparent to those skilled in the art that although the WDM 90 preferably uses achromatic doublets as the first collimating optical element, singlet lens can also be used since the images created before the focusing lenses 906, 908, 918, 919, 920 and 921 are all nearly monochromatic. Instead of using concave mirrors for relaying the beam of light reflected from the dichroic filters, one may also use refractive optics as relay element to extend the path of the collimated beam of light. A clear advantage of the zig-zag architecture used in the WDM 90, however, is the possibility for using array detectors, which would lead to a more compact WDM suitable for portable instrumentation.

FIG. 26 illustrates an optical ray trace for a prior art collimating device. The technique depicted in FIG. 26 is extensively used in conventional multicolor fluorescence instruments, for example, in United States Patent no. 6,683,314. As shown in FIG. 26, the beam of light diverges rapidly beyond the image 924 created by the collimating optical element 923. Consequently, the only option for constructing a multi-color device is to insert dichroic filters in between the collimating element 923 and its image 924.

Due to the constraint of etendue conservation, the diameter of the collimated beam must be significantly expanded to accept multiple dichroic filters in the section. The expanded beam creates serious challenge to refocusing the collimated beam down to small spots suitable for small area semiconductor detectors. To overcome these difficulties, some instrument manufacturers have chosen to use Mt exclusively for fluorescence detection such as in the main stream flow cytometers manufactured by Becton-Dickinson, Becman Coulter and Partec 's and the MegaBACE series of DNA sequencers by GE Amersham. Other instruments, such as the Luminex multiplexed bead analyzers, have selected certain color bands with known bright fluorescence, and uses large area APD for detecting light in the selected color bands.

FIG. 27 illustrates a perspective view of an alternative embodiment for a 6-port WDM 90 using a combination of zig-zag and branched configurations. The design is a modification of zig-zag configuration depicted in FIG. 25. In the alternative embodiment depicted in FIG. 27, band pass filter 904 of FIG. 25 is replaced by a dichroic filter 904'. The filter 904' is positioned to let one color pass through and reflects other colors at ninety degrees (90°). The optical path length of the beam of light passing through the dichroic filter 904' and that being reflected from the 904' are substantially the same, such that one arm is focused by lenses 905 and the other by lens 905' to small spots compatible with small area semiconductor detectors placed at focal location 906 and 906'. As shown in FIG. 25, the remaining color of the light reflected by dichroic filter 903 is relay imaged by a concave mirror 907 and the configuration including optical elements 903, 904', 905 and 905' is cascaded two (2) more times to form a 6 port-WDM.

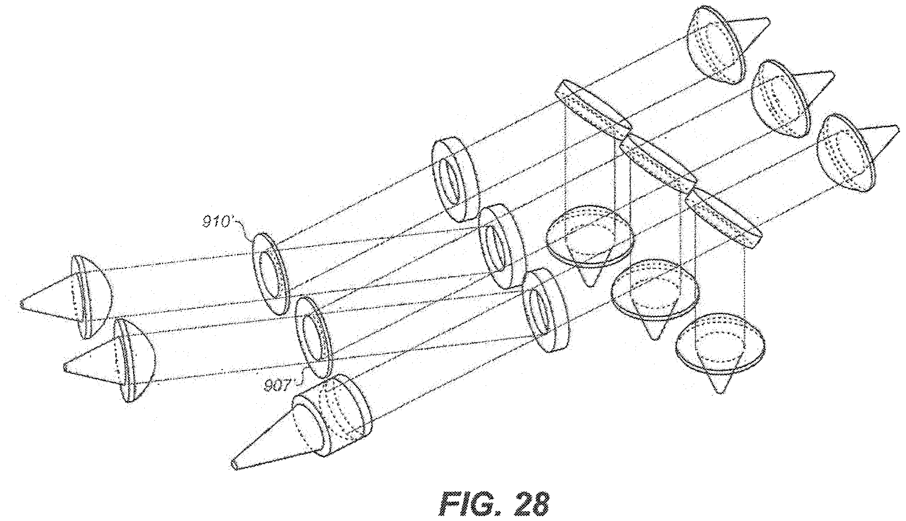

FIG. 28 illustrates a perspective view of an alternative embodiment for a 8-port WDM 90. By replacing the concave relay imaging mirrors 907 and 910 in FIG. 27 with concave shaped dichroic filters 907' and 910', the WDM depicted in FIG. 28 provides 2 more color bands in comparison with the WDMs depicted in FIGs. 25 and 27.

Numerous fluorescence probes for use in flow cytometry have been developed over the years. More recently, multiple fluorescence proteins have also become an important tool in biomedical studies. To accommodate different types of fluorescence probe, various techniques have been developed to enable user selection of dichroic filters suitable for their particular needs. A significant challenge for replaceable dichroic filters is avoiding direct contact of the coated filter surface with any hard flow cytometer reference frame. Repeated direct contact between the coated filter surface and any hard reference frame may damage a replaceable dichroic filter. Presently, most conventional solutions addressing this problem use precision-machined mechanical spacers for holding replaceable dichroic filters in place. One example of such a solution appears in United States Patent no. 6,683,314. However, such a solution becomes unreliable if the detector's active area is smaller than 1.0 mm$^2$.

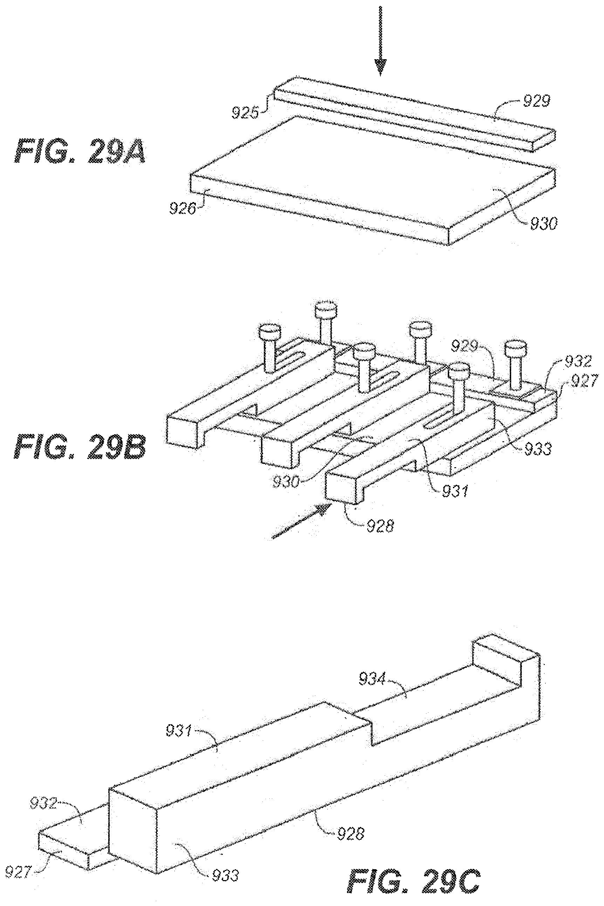

FIGs. 29A and 29B depict fabricating a replaceable dichroic filter assembly 934 illustrated in FIG. 29C suitable for small area detectors. Assembly of the replaceable dichroic filter assembly 934 begins in FIG. 29A which depicts constructing a reference template for its fabrication. The reference template is a staircase made of two (2) optically parallel glass plates 925 and 926. Bonding the two (2) glass plates 925 and 926 together in optical contact ensures that a surface 929 of the glass plate 925 becomes optically parallel to a surface 930 of the glass plate 926. A front surface 932 of a replaceable dichroic filter 927 is then pressed against the surface 929 of the template. A filter holder 928, which loosely fits the dichroic filter 927, includes a reference surface 931 and a filter slot 933. During assembly of the replaceable dichroic filter, the filter slot 933 is partially filled with epoxy adhesive and the reference surface 931 of the filter holder 928 is pressed against the surface 930 of the template while filter holder 928 slides toward the dichroic filter 927. While the epoxy adhesive sets, part of the dichroic filter 927 remains seated within the filter slot 933 while pressure is applied against the dichroic filter 927 and filter holder 928. It should be apparent to those skilled in the art that the epoxy adhesive may be either UV or thermally curable, or made by blending together components of an A/B mixture. FIG. 29C depicts the E934- fabricated as depicted in FIGs. 29A and 29B and described above. The assembly process depicted in FIGs. 29A and 29B and described above ensures that front surface 932 of the replaceable dichroic filter assembly 934 will be optically parallel to the reference surface 931, and indented with respect to the latter at a spacing accurately determined by the thickness of the glass plate 925.

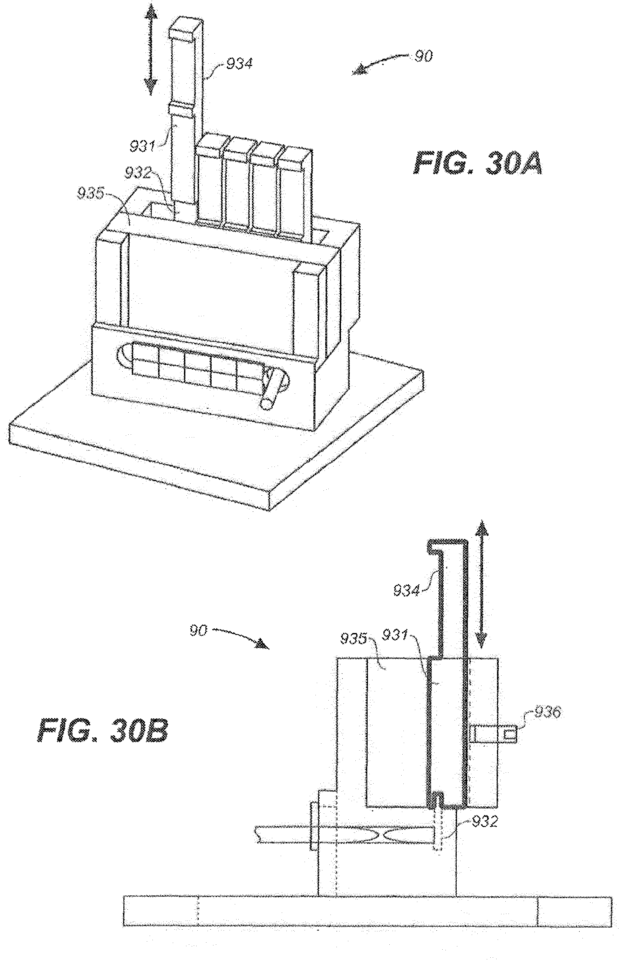

FIGs. 30A and 30B depict an embodiment of the present disclosure where the fore-mentioned replaceable dichroic filter assembly 934 is used in the WDM 90 for optically processing a beam of light from an extended light source. A notable feature of the WDM 90 is a glass reference block 935 having an optically flat surface. As will be apparent to those skilled in the art, the glass reference block 935 may be made of other materials. As shown in FIG 30B, when installing a dichroic filter 927 the reference surface 931 of the replaceable dichroic filter assembly 934 slides against the flat surface of the glass reference block 935 and is kept in contact therewith by a spring loaded screw 936. Consequently, the coated front surface 932 of the replaceable dichroic filter assembly 934 remains optically parallel to the optical flat and accurately located. In the meantime, the indentation of front surface 932 with respect to the reference reference surface 931 protects it from in physical contact with any object during filter replacement.

It is apparent to those skilled in the art that many modifications and variations of the described embodiments of the replaceable dichroic filter assembly 934 are possible. For example, an alternative embodiment of the present disclosure is a pedestal assembled using a first and a second round optical flat. When assembling the replaceable dichroic filter assembly 934, the reference surface of a filter holder rests against a surface of the first optical flat and the coated surface of the dichroic filter rests against the flat surface of the second optical flat. Epoxy bonding then holds the coated surface of the dichroic filter optically parallel to the reference surface of a filter holder, yet indented at a distance accurately determined by the thickness of the second optical flat.

Industrial Applicability

Although an embodiment of the present disclosure of an LD based optical system for flow cytometric application has been described in some detail, and equally advantageous embodiments have also been described for a stream based flow cytometric instrument, it will be apparent to those of ordinary skill in the art that many modifications and variations of the described embodiment are possible in the light of the above teachings without departing from the principles and concepts of the disclosure as set forth in the claims.

Although an embodiment of the present disclosure of wavelength division multiplexing device for separating light beam from an extended light source into multiple color bands has been described in some detail, and several other equally advantageous embodiments have also been described, it will be apparent to those ordinary skilled in the art that many modifications and variations of the described embodiments are possible in the light of the above teachings without departing from the principles and concepts of the disclosure as set forth in the claims.

Although the present invention has been described in terms of the presently preferred embodiment, it is to be understood that such disclosure is purely illustrative and is not to be interpreted as limiting. Consequently, without departing from the spirit and scope of the disclosure, various alterations, modifications, and/or alternative applications of the disclosure will, no doubt, be suggested to those skilled in the art after having read the preceding disclosure. Accordingly, it is intended that the following claims be interpreted as encompassing all alterations, modifications, or alternative applications as fall within the true spirit and scope of the disclosure.

Examples

1. A flow cytometer (40) comprising:

a) a laser diode ("LD") based optical subsystem (50) for directing a beam of light into a viewing zone of said flow cytometer (40) through which a sample liquid carrying particles flows, the sample liquid being hydrodynamically focused within the viewing zone by a liquid sheath flow that also flows through the viewing zone, the optical subsystem (50) including:

i. a LD for emitting a diverging beam of light from an edge thereof, the diverging beam of light having an elliptically shaped cross- sectional profile with both a major axis and a minor axis;
ii. a collimating lens for converting the diverging beam of light emitted from said LD into a collimated elliptical beam of light, wherein the minor axis of said collimated elliptical beam of light is oriented parallel to a direction in which particles pass through the viewing zone;
iii. a beam compressing optical element for reducing the size of said elliptical beam of light at the viewing zone whereby a width of said major axis of said elliptical beam of light oriented perpendicular to the direction in which particles pass through the viewing zone is less than a width of said liquid sheath flow; and
v. a cylindrical focusing element positioned adjacent to the viewing zone with an axis of said cylindrical focusing element being oriented perpendicular to the direction in which particles pass through the viewing zone whereby:

1) said minor axis of said beam of light becomes focused at the viewing zone; and
2) the size of said major axis of said elliptical beam of light at the viewing zone remains essentially unchanged;

b) a composite microscope objective (60) for imaging light scattered from and fluoresced by a particle present within the viewing zone, the composite microscope objective (60) including:

i. a concave mirror upon which scattered and fluoresced light impinges;
ii. an aberration corrector plate made of optically transparent material wherein said aberration corrector plate is an ashperic lens that has:

1) a first zone of said aberration corrector plate outside a neutral zone thereof where said aberration corrector plate:

A. is thinnest; and
B. has negative optical power; and

2) a second zone of said aberration corrector plate inside the neutral zone has positive optical power light reflected from the composite microscope objective (60) passing through said aberration corrector plate,

the viewing zone of said flow cytometer (40) being located between said concave mirror and said aberration corrector plate;

c) a fluidic subsystem (70) for supplying the liquid sheath flow to the viewing zone, the liquid sheath flow lacking pulsations, the fluidic subsystem (70) including :

i. a liquid pump for supplying liquid drawn from a reservoir;
ii. a T-coupling having at least one (1) inlet and two (2) outlets,

1) the inlet of said T-coupling receiving liquid from said liquid pump;
2) a first fraction of the liquid received by the inlet flowing via a first one of the outlets and via a bypass conduit back to the reservoir; and
3) a second fraction of the liquid received by the inlet flowing via a second one of the outlets and via a particle filter to the viewing zone of said flow cytometer (40);

d) a peristaltic pump 80 for supplying the sample liquid carrying the particles, the sample liquid being hydrodynamically focused within the viewing zone by the liquid sheath flow, the peristaltic pump 80 comprising:

i. a pump housing having a arcuate curved track formed therein that extends between a pump inlet and a pump outlet;
ii. a plurality of rollers that are attached to a rotor, the rollers having a substantially equal angular spacing between each pair of immediately adjacent rollers, the rotor being rotatable together with the rollers attached thereto inside said pump housing; and
ii a compressible tube sandwiched between said rollers and the arcuate curved track of said pump housing, the arcuate curved track including:

1) an exit section wherein, as a roller rolls through the exit section, said compressible tube adjacent to said roller progressively expands from fully closed at a beginning of said exit section to fully open at the pump outlet where said roller breaks contact with said compressible tube; and
2) at least one pumping section along the arcuate curved track between the pump inlet and the pump outlet wherein said compressible tube is compressed to fully closed by at least one of said rollers; and

e) a wavelength division multiplexer 90 ("WDM (90)") for separating into multiple colored bands a beam of light emitted initially from the viewing zone and imaged by the composite microscope objective (60) into an optical fiber for transmission to the WDM (90), the WDM (90) comprising:

i. a collimating optical element that magnifies an to produce an image of substantially the same size as the effective size of said collimating optical element;
ii. at least one dichroic filter located between said collimating optical element and said image, wherein said dichroic filter separates the collimated beam of light into two (2) branches of distinctive colors;
iii. a focusing optical element located in one of said branches, wherein the beam of light in said branch is focused to a spot having a diameter of less than 1.0 mm by said focusing optical element; and

iv. an image relay optical element located near the image produced by said collimating optical element in the other branch, wherein said image relay optical element produces an image of said collimating optical element at substantially unit magnification.

2. The flow cytometer (40) of example 1 wherein said cuvette has a rectangularly-shaped, and wherein the viewing zone of the flow cytometer (40) is located within a channel having a rectangularly-shaped cross-section that is located within said cuvette.

3. The flow cytometer (40) of example 1 wherein said cuvette has a tubularly-shaped cross-section, and wherein the viewing zone of the flow cytometer (40) is located within a channel having a circularly-shaped cross-section that is located within said cuvette.

4. The flow cytometer (40) of example 1 wherein the sample liquid and the liquid sheath flow form a jet stream in which the viewing zone of the flow cytometer (40) is located.

5. The flow cytometer (40) of example 2 wherein said cylindrical focusing element is in optical contact with an entrance face of said rectangularly-shaped cuvette.

6. The flow cytometer (40) of example 2 wherein said cylindrical focusing element is separated from said rectangularly-shaped cuvette.

7. The flow cytometer (40) of example 3 wherein said cylindrical focusing element is separated from said tubularly-shaped cuvette.

8. The flow cytometer (40) of example 4 wherein said cylindrical focusing element is separated from said jet stream.

9. The flow cytometer (40) of example 1 further comprising a polarization conditioning element through which said collimated elliptical beam of light passes.

10. The flow cytometer (40) of example 1 wherein an optical image of the viewing zone is formed outside the composite microscope objective (60).

11. The flow cytometer (40) of example 10 wherein the viewing zone is located within a flow channel included in a rectangularly-shapeed cuvette made of optically transparent material.

12. The flow cytometer (40) of example 11 wherein said concave mirror is a piano-concave back surface mirror made from an optically transparent material.

13. The flow cytometer (40) of example 12 wherein the piano-surface of said piano-concave back surface mirror is optically coupled to a flat surface of said cuvette.

14. The flow cytometer (40) of example 13 wherein an optical adhesive material accomplishes the optical coupling.

15. The flow cytometer (40) of example 13 wherein an index matching gel accomplishes the optical coupling.

16. The flow cytometer (40) of example 13 wherein an index matching fluid accomplishes the optical coupling.

17. The flow cytometer (40) of example 13 wherein optical contact bonding accomplishes the optical coupling.

18. The flow cytometer (40) of example 13 wherein the piano-concave back surface mirror formed integrally with said cuvette means.

19. The flow cytometer (40) of example 11 wherein said aberration corrector plate is a piano-aspherical lens.

20. The flow cytometer (40) of example 19 wherein a piano-surface of said aberration corrector plate is optically coupled to a flat surface of said cuvette opposite of said piano-concave back surface mirror.

21. The flow cytometer (40) of example 20 wherein an index matching gel accomplishes the optical coupling.

22. The flow cytometer (40) of example 20 wherein an index matching fluid accomplishes the optical coupling.

23. The flow cytometer (40) of example 20 wherein optical contact bonding accomplishes the optical coupling.

24. The flow cytometer (40) of example 20 wherein the piano-aspherical lens is formed integrally with said cuvette.

25. The flow cytometer (40) of example 19 wherein said aberration corrector plate is detached from said cuvette.

26. The flow cytometer (40) of example 10 wherein the viewing zone is inside a jet stream.

27. The flow cytometer (40) of example 25 wherein said concave mirror is a front surface mirror.

28. The flow cytometer (40) of example 10 wherein the viewing zone is located on a surface of a flat, transparent substrate.

29. The flow cytometer (40) of example 28 wherein said concave mirror is a piano-concave back surface mirror made from an optically transparent material.

30. The flow cytometer (40) of example 29 wherein the piano-surface of said piano-concave back surface mirror is optically coupled to said flat, transparent substrate.

31. The flow cytometer (40) of example 30 wherein an optical adhesive material accomplishes the optical coupling.

32. The flow cytometer (40) of example 30 wherein an index matching gel accomplishes the optical coupling.

33. The flow cytometer (40) of example 30 wherein an index matching fluid accomplishes the optical coupling.

34. The flow cytometer (40) of example 30 wherein optical contact bonding accomplishes the optical coupling.

35. The flow cytometer (40) of example 29 wherein said piano-concave back surface mirror is formed integrally with said flat, transparent substrate.

36. The flow cytometer (40) of example 28 wherein said aberration corrector plate is detached from said flat, transparent substrate.

37. The flow cytometer (40) of example 1 wherein the particle filter has inlet thereto for receiving liquid from the T-coupling, the inlet of the particle filter being disposed so that air becomes trapped within the particle filter at the inlet thereto.

38. The flow cytometer (40) of example 37 wherein when said liquid pump is turned off air cannot enter into the bypass conduit.

39. The flow cytometer (40) of example 38 further comprising a small capsule disposed between the second one of the outlets of said T-coupling and the particle filter for storing air ejected from the particle filter when the liquid pump is turned off.

40. The flow cytometer (40) of example 38 further comprising a length of tubing disposed between the second one of the outlets of said T-coupling and the particle filter for storing air ejected from the particle filter when the liquid pump is turned off.

41. The flow cytometer (40) of example 38 further comprising an adjustable valve located in the bypass conduit between the first one of the outlets of the T-coupling and the reservoir for restricting liquid flow therebetween.

42. The flow cytometer (40) of example 38 further comprising an adjustable valve located between the second one of the outlets of the T-coupling and the viewing zone for restricting liquid flow therebetween.

43. The flow cytometer (40) of example 38 wherein the throughput of the liquid pump is adjustable.

44. The flow cytometer (40) of example 1 wherein the arcuate curved track of said pump housing includes at least two (2) pumping sections, the arcuate curved track further including at least one recess section located between said pumping sections along the arcuate curved track, and wherein said compressible tube at said recess section becomes decompressed to full expansion then compressed to fully closed when one (1) of said rollers rolls through said recess section.

45. The flow cytometer (40) of example 44 includes a plurality of recess sections along said arcuate curved track upstream of the pump outlet, the angular spacing between the compression part of said recess section adjacent to the pump outlet and said exit section of said arcuate curved track being substantially the same as the angular spacing between each pair of immediately adjacent rollers.

46. The flow cytometer (40) of example 44 wherein said compression part of said recess section adjacent to the pump outlet has a shape complementing a shape of said exit section of said arcuate curved track to maintain the total fluid volume inside a section of said compressible tube extending from said recess section to the pump outlet substantially invariant when one of said rollers progressively rolls off said exit section of the arcuate curved track.

47. The flow cytometer (40) of example 44 having a plurality of recess sections respectively interspersed between immediately adjacent pairs of a plurality of pumping sections.

48. The flow cytometer (40) of example 46 wherein both

a) angular spacing between adjacent pairs of recess sections; and
b) angular spacing between said exit section of said arcuate curved track and an adjacent recess section to said exit section

are substantially the same as the angular spacing between each pair of immediately adjacent rollers.

49. The flow cytometer (40) of example 47 wherein shapes of a plurality of recess sections of said arcuate curved track complement a shape of said exit section of said arcuate curved track to maintain, a fluid volume in sections of said compressible tube at the plurality of recess sections and said exit section substantially invariant when one of said rollers progressively rolls off said exit section of the arcuate curved track.

50. The flow cytometer (40) of example 1 wherein a speed of said rotor is programmably controlled to vary substantially in inverse proportion to the fluid volume change rate in said compressible tube due to its changing compression near the exit section of said arcuate curved track.

51. The flow cytometer (4 0) of example 1 wherein at least one additional dichroic filter is located between said image relay optical element and the image produced by said image relay optical element, wherein said dichroic filter produces two (2) branches of the beam of light having distinctive colors.

52. The flow cytometer (40) of example 51 wherein another focusing optical element is located in one of said branches and focuses the beam of light in the branch into a spot having a diameter of less than 1.0 mm.

53. The flow cytometer (40) of example 52 wherein successive combinations of said image relay optical element, dichroic filter and focusing optical element are cascaded to produce additional focused spots having a diameter of less than 1.0 mm for multiple colored bands of said beam of light.

54. The flow cytometer (40) of example 52 wherein the dichroic filter is assembled using a template that include two (2) optically flat glass plates bonded together in optical contact, and wherein the dichroic filter is bonded to a filter holder using the template such that a coated filter surface of the dichroic filter is indented and optically parallel to a reference surface of the filter holder.

55. The flow cytometer (40) of example 54 wherein the reference surface of the filter holder rests against an optically flat surface of an reference block included in the WDM (90) thereby providing consistent optical alignment when installing the dichroic filter into the WDM (90).

56. A LD based optical subsystem (50) for impinging a beam of light into a viewing zone in which a <'>particle is present, the optical subsystem (50) comprising:

a) a LD for emitting a diverging beam of light from an edge thereof, the diverging beam of light having an elliptically shaped cross-sectional profile with both a major axis and a minor axis;

b) a collimating lens for converting the diverging beam of light emitted from said LD into a collimated elliptical beam of light, wherein the minor axis of said collimated elliptical beam of light is oriented parallel to a direction in which particles pass through the viewing zone;

c) a beam compressing optical element for reducing the size of said elliptical beam of light at the viewing zone whereby a width of said major axis of said elliptical beam of light oriented perpendicular to the direction in which particles pass through the viewing zone is less than a width of said liquid sheath flow; and

d) a cylindrical focusing element positioned adjacent to the viewing zone with an axis of said cylindrical focusing element being oriented perpendicular to the direction in which particles pass through the viewing zone whereby:

    i. said minor axis of said beam of light becomes focused at the viewing zone; and
    ii. the size of said major axis of said elliptical beam of light at the viewing zone remains essentially unchanged.

57. The optical subsystem (50) of example 56 further comprising a cuvette having a rectangularly-shaped cross-section, and wherein the viewing zone is located within a channel having a rectangularly-shaped cross-section that is located within said cuvette.

58. The optical subsystem (50) of example 56 further comprising a cuvette having a tubularly-shaped cross-section, and wherein the viewing zone is located within a channel having a circularly-shaped cross-section that is located within said cuvette.

59. The optical subsystem (50) of example 56 wherein the sample liquid and the liquid sheath flow form a jet stream in which the viewing zone is located.

60. The optical subsystem (50) of example 57 wherein said cylindrical focusing element is in optical contact with an entrance face of said rectangularly-shaped cuvette.

61. The optical subsystem (50) of example 57 wherein said cylindrical focusing element is separated from said rectangularly-shaped cuvette.

62. The optical subsystem (50) of example 58 wherein said cylindrical focusing element is separated from said tubularly- shaped cuvette.

63. The optical subsystem (50) of example 59 wherein said cylindrical focusing element is separated from said jet stream.

64. The optical subsystem (50) of example 56 further comprising a polarization conditioning element through which said collimated elliptical beam of light passes.

65. A method for delivering an elliptically shaped beam of light using a LD based optical subsystem (50), the beam of light having a smooth profile at a focus of a minor axis thereof that is located at a viewing zone through which a sample liquid flows, the sample liquid being hydrodynamically focused within the viewing zone by a liquid sheath flow that also flows through the viewing zone, the method comprising the steps of:

a) providing a LD that emits a diverging beam of light from an edge thereof, the diverging beam of light having an elliptically shaped cross-sectional profile with both a major axis and a minor axis;

b) impinging the diverging beam of light emitted by the LD upon a collimating lens for converting the diverging beam of light emitted therefrom into a collimated elliptical beam of light wherein the minor axis of said collimated elliptical beam of light is oriented parallel to a direction in which sample liquid passes through the viewing zone;

c) after passing through said collimating lens, impinging the collimated elliptical beam of light upon an beam compressing optical element for reducing the size of said elliptical beam of light at the viewing zone whereby a width of said major axis of said elliptical beam of light oriented perpendicular to the direction in which sample liquid passes through the viewing zone becomes less than a width of said liquid sheath flow; and

d) after passing through said beam compressing optical element, impinging the beam of light upon a cylindrical focusing element positioned adjacent to the viewing zone with an axis of said cylindrical focusing element being oriented perpendicular to the direction in which sample liquid passes through the viewing zone whereby:

i. said minor axis of said beam of light becomes focused at the viewing zone; and

ii. the size of said major axis of said elliptical beam of light at the viewing zone remains essentially unchanged.

66. The method of example 65 wherein the viewing zone is located within a channel having a rectangularly-shaped cross-section that is located within a cuvette.

67. The method of example 65 wherein the viewing zone is located within a channel having a circularly-shaped cross-section that is located within a cuvette.

68. The method of example 65 wherein the viewing zone is located within a jet stream.

69. The method of example 66 further comprising a step of establishing an optical contact between said cylindrical focusing element and an entrance face of said cuvette.

70. The method of example 66 further comprising a step of establishing a spacing between said cylindrical focusing element and said cuvette.

71. The method of example 67 further comprising a step of establishing a spacing between said cylindrical focusing element and said cuvette.

72. The method of example 68 further comprising a step of establishing a spacing between said cylindrical focusing element and said jet stream.

73. The method of example 65 further comprising a step of inserting a polarization conditioning element between the collimating lens and the beam compressing optical element whereby the collimated elliptical beam of light passes through the polarization conditioning element.

74. A composite microscope objective (60) adapted for imaging light scattered from and fluoresced by a particle present within a viewing zone comprising:

a) a concave mirror upon which scattered and fluoresced light impinges;

b) an aberration corrector plate made of optically transparent material wherein said aberration corrector plate is an ashperic lens that has:

i. a first zone of said aberration corrector plate outside a neutral zone thereof where said aberration corrector plate:

1) is thinnest; and
2) has negative optical power; and

ii. a second zone of said aberration corrector plate inside the neutral zone has positive optical power, light reflected from the composite microscope objective (60) passing through said aberration corrector plate,

the viewing zone being located between said concave mirror and said aberration corrector plate.

75. The composite microscope objective (60) of example 74 wherein an optical image of the viewing zone is formed outside the composite microscope objective (60).

76. The composite microscope objective (60) of example 75 wherein the viewing zone is located within a flow channel included in a rectangularly-shaped cuvette made of optically transparent material.

77. The composite microscope objective (60) of example 76 wherein said concave mirror is a piano-concave back surface mirror made from an optically transparent material.

78. The composite microscope objective (60) of example 77 wherein a piano-surface of said piano-concave back surface mirror is optically coupled to a flat surface of said cuvette.

79. The composite microscope objective (60) of example 78 wherein an optical adhesive material accomplishes the optical coupling.

80. The composite microscope objective (60) of example 78 wherein an index matching gel accomplishes the optical coupling.

81. The composite microscope objective (60) of example 78 wherein an index matching fluid accomplishes the optical coupling.

82. The composite microscope objective (60) of example 78 wherein optical contact bonding accomplishes the optical coupling.

83. The composite microscope objective (60) of example 78 wherein the piano-concave back surface mirror formed integrally with said cuvette means.

84. The composite microscope objective (60) of example 76 wherein said aberration corrector plate is a piano-aspherical lens.

85. The composite microscope objective (60) of example 84 wherein a piano-surface of said aberration corrector plate is optically coupled to a flat surface of said cuvette opposite of said piano-concave back surface mirror.

86. The composite microscope objective (60) of example 85 wherein an index matching gel accomplishes the optical coupling.

87. The composite microscope objective (60) of example 85 wherein an index matching fluid accomplishes the optical coupling.

88. The composite microscope objective (60) of example 85 wherein optical contact bonding accomplishes the optical coupling.

89. The composite microscope objective (60) of example 85 wherein the piano-aspherical lens is formed integrally with said cuvette.

90. The composite microscope objective (60) of example 84 wherein said aberration corrector plate is detached from said cuvette.

91. The composite microscope objective (60) of example 75 wherein the viewing zone is inside a jet stream.

92. The composite microscope objective (60) of example 90 wherein said concave mirror is a front surface mirror.

93. The composite microscope objective (60) of example 75 wherein the viewing zone is located on a surface of a flat, transparent substrate.

94. The composite microscope objective (60) of example 93 wherein said concave mirror is a piano-concave back surface mirror made from an optically transparent material.

95. The composite microscope objective (60) of example 94 wherein a piano-surface of said piano-concave back surface mirror is optically coupled to said flat, transparent substrate.

96. The composite microscope objective (60) of example 95 wherein an optical adhesive material accomplishes the optical coupling.

97. The composite microscope objective (60) of example 95 wherein an index matching gel accomplishes the optical coupling.

98. The composite microscope objective (60) of example 95 wherein an index matching fluid accomplishes the optical coupling.

99. The composite microscope objective (60) of example 95 wherein optical contact bonding accomplishes the optical coupling.

100. The composite microscope objective (60) of example 94 wherein said piano-concave back surface mirror is formed integrally with said flat, transparent substrate.

101. The composite microscope objective (60) of example 93 wherein said aberration corrector plate is detached from said flat, transparent substrate.

102. A method for characterizing microscopic species using a microscope objective device comprising:

a) A concave mirror;
b) An aberration corrector plate made of optically transparent material wherein said aberration corrector plate is an ashperic lens with the zone of said plate means outside of the neutral zone wherein the thickness of said plate means is thinnest, having negative optical power, and the zone inside the neutral zone having positive optical power
c) A viewing zone located in between said concave mirror and said aberration corrector plate.

103. The method of example 102 wherein an optical image of the viewing zone is formed outside the device.

104. The method of example 103 wherein the viewing zone is located within a flow channel contained in a rectangularly- shaped cuvette means made of optically transparent material.

105. The method of example 104 wherein said concave mirror is a piano-concave back surface mirror made from an optically transparent material.

106. The method of example 105 wherein a piano-surface of said piano-concave back surface mirror means is optically coupled to a flat surface of said cuvette means.

107. The method of example 106 wherein an optical adhesive material accomplishes the optical coupling.

108. The method of example 106 wherein an index matching gel accomplishes the optical coupling.

109. The method of example 106 wherein an index matching fluid accomplishes the optical coupling.

110. The method of example 106 wherein optical contact bonding accomplishes the optical coupling.

111. The method of example 106 wherein the piano-concave back surface mirror is formed integrally with said cuvette.

112. The method of example 104 wherein said aberration corrector plate is a plano-aspherical lens.

113. The method of example 112 wherein a piano-surface of said aberration corrector plate is optically coupled to a flat surface of said cuvette means opposite of said concave mirror.

114. The method of example 113 wherein an index matching gel accomplishes the optical coupling.

115. The method of example 113 wherein an index matching fluid accomplishes the optical coupling.

116. The method of example 113 wherein optical contact bonding accomplishes the optical coupling.

117. The method of example 113 wherein the piano-aspherical lens is formed integrally with said cuvette.

118. The method of example 112 wherein said aberration corrector plate is detached from said cuvette.

119. The method of example 102 wherein the viewing zone is inside a jet stream.

120. The method of example 119 wherein said concave mirror is a front surface mirror.

121. The method of example 102 wherein the viewing zone is located on a surface of a flat, transparent substrate.

122. The method of example 121 wherein said concave mirror is a piano-concave back surface mirror made from an optically transparent material.

123. The method of example 122 wherein a piano-surface of said piano-concave back surface mirror means is optically coupled to said flat, transparent substrate.

124. The method of example 123 wherein an optical adhesive material accomplishes the optical coupling.

125. The method of example 123 wherein an index matching gel accomplishes the optical coupling.

126. The method of example 123 wherein an index matching fluid accomplishes the optical coupling.

127. The method of example 123 wherein optical contact bonding accomplishes the optical coupling.

128. The method of example 122 wherein said piano-concave back surface mirror is formed integrally with said flat, transparent substrate.

129. The method of example 128 wherein said aberration corrector plate is detached from said flat, transparent substrate.

130. A fluidic subsystem (70) for supplying a liquid flow pulsation free to an outlet of the fluidic subsystem (70), the fluidic subsystem (70) comprising:

a) a liquid pump for supplying liquid drawn from a reservoir;
b) a T-coupling having at least one (1) inlet and two (2) outlets,

i. the inlet of said T-coupling receiving liquid from said liquid pump;
ii. a first fraction of the liquid received by the inlet flowing via a first one of the outlets and via a bypass conduit back to the reservoir; and
iii. a second fraction of the liquid received by the inlet flowing via a second one of the outlets and via a particle filter to the outlet of the fluidic subsystem (70) .

131. The fluidic subsystem (70) of example 130 wherein the particle filter has inlet thereto for receiving liquid from the T-coupling, the inlet of the particle filter being disposed so that air becomes trapped within the particle filter at the inlet thereto.

132. The fluidic subsystem (70) of example 131 wherein when said liquid pump is turned off air cannot enter into the bypass conduit.

133. The fluidic subsystem (70) of example 132 further comprising a small capsule disposed between the second one of the outlets of said T-coupling and the particle filter for storing air ejected from the particle filter when the liquid pump is turned off.

134. The fluidic subsystem (70) of example 132 further comprising a length of tubing disposed between the second one of the outlets of said T-coupling and the particle filter for storing air ejected from the particle filter when the liquid pump is turned off.

135. The fluidic subsystem (70) of example 132 further comprising an adjustable valve located in the bypass conduit between the first one of the outlets of the T-coupling and the reservoir for restricting liquid flow therebetween.

136. The fluidic subsystem (70) of example 132 further comprising an adjustable valve located between the second one of the outlets of the T-coupling and the outlet of the fluidic subsystem (70) for restricting liquid flow therebetween.

137. The fluidic subsystem (70) of example 132 wherein the throughput of the liquid pump is adjustable.

138. A method for supplying a liquid flow pulsation free to an outlet of the fluidic subsystem (70), the method comprising :

a) a liquid pump for supplying liquid drawn from a reservoir;
b) a T-coupling having at least one (1) inlet and two (2) outlets,

i. the inlet of said T-coupling receiving liquid from said liquid pump;
ii. a first fraction of the liquid received by the inlet flowing via a first one of the outlets and via a bypass conduit back to the reservoir; and
iii. a second fraction of the liquid received by the inlet flowing via a second one of the outlets and via a particle filter to the outlet of the fluidic subsystem (70).

139. The method of example 138 wherein during normal operation certain amount of air is trapped near the inlet portion of said filter cartridge means.

140. The method of example 139 wherein said reservior means holds sufficient amount of liquid such that when said pump means is turned off, portion of the tubing between said Tee means and said reservior means is still filled with liquid, preventing said trapped air from leaking into said bypass means.

141. The method of example 140 wherein said reservior means is a capsule.

142. The method of example 140 wherein said reservior means is a piece of tubing.

143. The method of example 140 wherein an adjustable flow restrictor menas is placed in the bypass route.

144. The method of example 140 wherein an adjustable flow restrictor menas is placed in the sheath route.

145. The method of example 140 wherein the throughput of the sheath pump is adjustable.

146. A peristaltic pump 80 comprising:

a) a pump housing having a arcuate curved track formed therein that extends between a pump inlet and a pump outlet;
b) a plurality of rollers that are attached to a rotor, the rollers having a substantially equal angular spacing between each pair of immediately adjacent rollers, the rotor being rotatable together with the rollers attached thereto inside said pump housing; and
c) a compressible tube sandwiched between said rollers and the arcuate curved track of said pump housing, the arcuate curved track including:

i. an exit section wherein, as a roller rolls through the exit section, said compressible tube adjacent to said roller progressively expands from fully closed at a beginning of said exit section to fully open at the pump outlet where said roller breaks contact with said compressible tube; and
ii. at least one pumping section along the arcuate curved track between the pump inlet and the pump outlet wherein said compressible tube is compressed to fully closed by at least one of said rollers.

147. The peristaltic pump 80 of example 146 wherein the arcuate curved track of said pump housing includes at least two (2) pumping sections, the arcuate curved track further including at least one recess section located between said pumping sections along the arcuate curved track, and wherein said compressible tube at said recess section becomes decompressed to full expansion then compressed to fully closed when one (1) of said rollers rolls through said recess section.

148. The peristaltic pump 80 of example 147 includes a plurality of recess sections along said arcuate curved track upstream of the pump outlet, the angular spacing between the compression part of said recess section adjacent to the pump outlet and said exit section of said arcuate curved track being substantially the same as the angular spacing between each pair of immediately adjacent rollers.

149. The peristaltic pump 80 of example 147 wherein said compression part of said recess section adjacent to the pump outlet has a shape complementing a shape of said exit section of said arcuate curved track to maintain the total fluid volume inside a section of said compressible tube extending from said recess section to the pump outlet substantially invariant when one of said rollers progressively rolls off said exit section of the arcuate curved track.

150. The peristaltic pump 80 of example 147 having a plurality of recess sections respectively interspersed between immediately adjacent pairs of a plurality of pumping sections.

151. The peristaltic pump 80 of example 149 wherein both:

a) angular spacing between adjacent pairs of recess sections; and
b) angular spacing between said exit section of said arcuate curved track and an adjacent recess section to said exit section

are substantially the same as the angular spacing between each pair of immediately adjacent rollers.

152. The peristaltic pump 80 of example 150 wherein shapes of a plurality of recess sections of said arcuate curved track complement a shape of said exit section of said arcuate curved track to maintain a fluid volume in sections of said compressible tube at the plurality of recess sections and said exit section substantially invariant when one of said rollers progressively rolls off said exit section of the arcuate curved track.

153. The peristaltic pump 80 of example 146 wherein a speed of said rotor is programmably controlled to vary substantially in inverse proportion to the fluid volume change rate in said compressible tube due to its changing compression near the exit section of said arcuate curved track.

154. A method for delivering liquid using a peristaltic pump 80 comprising:

a) a pump housing with arcuate curved track;
b) A plurality of rollers attached to a rotor means rotatable inside said pump housing;
c) Said plurality of rollers spaced at substantially equal angular spacing from each other;
d) A compressible tube sandwiched between said rollers and the arcuate curved track of said pump housing;
e) Said arcuate curved track of said pump housing including an exit section, wherein said compressible tube being progressively decompressed to full expansion when one of said rollers rolls off the compressible tube at the pump outlet;
f) At least one pumping section along the arcuate curved track of said pump housing between the pump inlet and pump outlet wherein said compressible tube is compressed to full closure by one of said rollers.

155. The method of example 154 wherein the arcuate curved track of said pump housing includes at least two (2) pumping sections, the arcuate curved track further including at least one recess section located between said pumping sections along the arcuate curved track, and wherein said compressible tube at said recess section becomes decompressed to full expansion then compressed to fully closed when one (1) of said rollers rolls through said recess section.

156. The method of example 155 wherein the peristaltic pump 80 includes a plurality of recess sections along said arcuate curved track upstream of the pump outlet; The angular spacing between the compression part of said recess section adjacent to the pump outlet and said exit section of said arcuate curved track being substantially the same as the angular spacing between each pair of immediately adjacent rollers.

157. The method of example 155 wherein said compression part of said recess section adjacent to the pump outlet has a shape complementing a shape of said exit section of said arcuate curved track to maintain the total fluid volume inside a section of said compressible tube extending from said recess section to the pump outlet substantially invariant when one of said rollers progressively rolls off said exit section of the arcuate curved track.

158. The method of example 155 having a plurality of recess sections respectively interspersed between immediately adjacent pairs of a plurality of pumping sections.

159. The method of example 157 wherein both:

a) angular spacing between adjacent pairs of recess sections; and
b) angular spacing between said exit section of said arcuate curved track and an adjacent recess section to said exit section

are substantially the same as the angular spacing between each pair of immediately adjacent rollers.

160. The method of example 158 wherein shapes of a plurality of recess sections of said arcuate curved track complement a shape of said exit section of said arcuate curved track to maintain a fluid volume in sections of said compressible tube at the plurality of recess sections and said exit section substantially invariant when one of said rollers progressively rolls off said exit section of the arcuate curved track.

161. The method of example 154 wherein a speed of said rotor of the peristaltic pump 80 is programmably controlled to vary substantially in inverse proportion to the fluid volume change rate in said compressible tube due to its changing compression near the exit section of said arcuate curved track.

162. A WDM (90) for separating a beam of light emitted from an into multiple colored bands, the WDM (90) comprising:

a) a collimating optical element that magnifies an to produce an image of substantially the same size as the effective size of said collimating optical element;
b) at least one dichroic filter located between said collimating optical element and said image, wherein said dichroic filter separates the collimated beam of light into two (2) branches of distinctive colors;
c) a focusing optical element located in one of said branches, wherein the beam of light in said branch is focused to a spot having a diameter of less than 1.0 mm by said focusing optical element; and
d) an image relay optical element located near the image produced by said collimating optical element in the other branch, wherein said image relay optical element produces an image of said collimating optical element at substantially unit magnification.

163. The WDM (90) of example 162 wherein at least one additional dichroic filter is located between said image relay optical element and the image produced by said image relay optical element, wherein said dichroic filter produces two (2) branches of the beam of light having distinctive colors.

164. The WDM (90) of example 163 wherein another focusing optical element is located in one of said branches and focuses the beam of light in the branch into a spot having a diameter of less than 1.0 mm.

165. The WDM (90) of example 164 wherein successive combinations of said image relay optical element, dichroic filter and focusing optical element are cascaded to produce additional focused spots having a diameter of less than 1.0 mm for multiple colored bands of said beam of light.

166. The WDM (90) of example 164 wherein the dichroic filter is assembled using a template that include two (2) optically flat glass plates bonded together in optical contact, and wherein the dichroic filter is bonded to a filter holder using the template such that a coated filter surface of the dichroic filter is indented and optically parallel to a reference surface of the filter holder.

167. The WDM (90) of example 166 wherein the reference surface of the filter holder rests against an optically flat surface of an reference block included in the WDM (90) thereby providing consistent optical alignment when installing the dichroic filter into the WDM (90).

168. A method for separating beam of light emitted from an into colored bands using a WDM (90) comprising

a) a collimating optical element that magnifies an to produce an image of substantially the same size as the effective size of said collimating optical element;
b) at least one dichroic filter located between said collimating optical element and said image, wherein said dichroic filter separates the collimated beam of light into two (2) branches of distinctive colors;
c) a focusing optical element located in one of said branches, wherein the beam of light of said branch is focused to a spot having a diameter of less than 1.0 mm by said focusing optical element; and
d) an image relay optical element located near the image produced by said collimating optical element in the other branch, wherein said image relay optical element produces an image of said collimating optical element at substantially unit magnification.

169. The method of example 168 wherein at least one additional dichroic filter is located between said image relay optical element and the image produced by said image relay optical element, wherein said dichroic filter produces two (2) branches of beam of light having distinctive colors.

170. The method of example 169 wherein another focusing optical element is located in one of said branches and focuses the beam of light in the branch into a spot having a diameter of less than 1.0 mm.

171. The method of example 170 wherein successive combinations of said image relay optical element, dichroic filter and focusing optical element are cascaded to produce additional focused spots having a diameter of less than 1.0 mm for multiple colored bands of said beam of light.

172. The method of example 170 wherein the dichroic filter is assembled using a template that include two (2) optically flat glass plates bonded together in optical contact, and wherein the dichroic filter is bonded to a filter holder using the template such that a coated filter surface of the dichroic filter is indented and optically parallel to a reference surface of the filter holder.

173. The method of example 172 wherein the reference surface of the filter holder rests against an optically flat surface of an reference block included in the WDM (90) thereby providing consistent optical alignment when installing the dichroic filter into the WDM (90).

**Claims**

1. A wavelength division multiplexer (WDM) comprising:

   a set of filters, each filter of the set of filters configured to pass a corresponding portion of multiple portions of light;
   at least one mirror including at least one curved mirror, the at least one mirror configured to:

      receive one or more portions of the light from the set of filters; and
      reflect the one or more portions of the light to the set of filters; and

   a set of detectors, each detector of the set of detectors corresponding to a filter of the set of filters and configured to receive a portion of the light at the detector that passed through the filter corresponding to the detector.

2. The WDM of claim 1, wherein:

   the set of filters include an array of multiple filters,
   the set of detectors includes an array of multiple detectors, and
   the one or more portions of the light include different bands of the light.

3. The WDM of any of claims 1 to 2, wherein:

   the light is received via an optical fiber,
   the light includes fluorescent light, or
   the one or more portions of the light include different color bands of the light.

4. The WDM of any of claims 1 to 3, further comprising:

   a block positioned between the at least one mirror and the set of filters, the block configured to enable transmission of the light; and
   a set of elements, each element of the set of elements positioned in an optical path between a different pair of a filter of the set of filters and a detector of the set of detectors,
   wherein each element of the set of elements includes a bandpass filter, a lens, or a combination thereof.

5. The WDM of any of claims 1 to 4, wherein:

   the set of detectors include:

      one or more avalanche photodetectors (APDs),
      one or more side scatter detectors, or
      a combination thereof;

   the set of filters include at least one dichroic filter, and

the at least one curved mirror is a concave mirror.

6. The WDM of any of claims 1 to 5, wherein the set of filters and the at least one mirror are figured to optically communicate at least one portion of the light back and forth between the set of filters and the at least one mirror in a zig-zag pattern.

7. The WDM of any of claims 1 to 6, further comprising a collimating optical element positioned in an optical path of the light and upstream of the set of filters, the collimating optical element configured to receive the light and output a collimated beam of the light.

8. The WDM of any of claims 1 to 7, wherein an optical path of the light includes a first filter of the set of filters, followed by a first mirror of the at least one mirror, followed by a second filter of the set of filters, followed by a second mirror of the at least one mirror, followed by a third filter of the set of filters, followed by a third mirror of the at least one mirror, and followed by a fourth filter of the set of filters.

9. The WDM of claim 8, wherein:

the first filter is an initial filter of the set of filters configured to receive the light,
the second filter is configured to receive a first collimated beam of the light from the first mirror, and
the fourth filter is configured to receive a second collimated beam of the light from the third mirror.

10. A flow cytometer comprising the WDM of any of claims 1 to 9.

11. The flow cytometer of claim 10, further comprising:

a light source including one or more lasers, and
wherein:

the one or more lasers include a blue laser, a green laser, a red laser, a violet laser, an ultraviolet laser, or a combination,
at least one laser of the one or more lasers is configured to provide a wavelength of one of 405 nm, 488 nm, or 561 nm, or
a combination thereof.

12. The flow cytometer of any of claims 10 to 11, further comprising:

a flow cell including a flow channel configured to enable passage of a particle; and
an optical element configured to detect scattered light emitted by the particle in the flow channel and illuminated by a light source.

13. The flow cytometer of claim 12, wherein the optical element includes a collecting optical element configured to detect:

first light scatter generated by the particle passing through a first laser beam, where the particle flows in a flow channel; and
second light scatter generated by the particle flowing in the flow channel and passing through a second laser beam.

14. The flow cytometer of any of claims 12 to 13, further comprising:

a plurality of lasers including a first laser configured to illuminate the particle in the flow channel at a first location; and
a second laser configured to illuminate the particle at a second location in the flow channel.

15. The flow cytometer of any of claims 12 to 14, further comprising:

an optical fiber optically disposed between the optical element and the WDM, and
wherein the optical element is configured to output, based on the detected scattered light, the light to the WDM via the optical fiber, and

wherein the set of filters is configured to receive the light output by the optical element.

**FIG. 1**

MINOR AXIS
SLOW AXIS

MAJOR AXIS
FAST AXIS

*FIG. 2*

*FIG. 2A*

FIG. 3A

FIG. 3B

FIG. 4A

FIG. 4B

FIG. 5A

FIG. 5B

FIG. 5C

FIG. 6

FIG. 6A

**FIG. 7**

**FIG. 8**

FIG. 9A

FIG. 9B1

FIG. 9B2

FIG. 9B3

FIG. 10

FIG. 11

FIG. 12

FIG. 13

FIG. 14

FIG. 15

46

FIG. 16A

FIG. 16B

FIG. 17

FIG. 18A

FIG. 18B

FIG. 18C

FIG. 18D

FIG. 19

FIG. 19A

FIG. 19B

**FIG. 20A**

**FIG. 20B**

**FIG. 21**

**FIG. 22**

**FIG. 23**

FIG. 24A

FIG. 24B

FIG. 24C

**FIG. 25**

FIG. 26

FIG. 27

FIG. 28

FIG. 29A

FIG. 29B

FIG. 29C

*FIG. 30A*

*FIG. 30B*

**REFERENCES CITED IN THE DESCRIPTION**

**Patent documents cited in the description**

- US 5788927 A
- US 6713019 B
- US 7385682 B
- US 7561267 B
- US 4727020 A
- US 6510007 B
- US 7110192 B
- WO 0127590 A
- US 5245318 A
- US 8187888 B
- US 3726613 A
- US 3826593 A
- US 4834630 A
- US 7645127 B
- US 6683314 B
- US 4482994 A
- US 5786915 A

**Non-patent literature cited in the description**

- **HOWARD M. SHAPIRO.** Practical Flow Cytometry. Wiley, 2003
- **A.V. ORDEN ; R.A. KELLER ; W. P.AMBROSE.** High-Throughput Flow Cytometric DNA Fragment Sizing. *Anal. Chem.,* 2000, vol. 72 (1), 37-41
- **SCHMIDT, B.** *Mitt. Hamburg Sternwart,* 1932, vol. 7 (36
- **JULIO CHAVES.** Introduction to Nonimaging Optics. CRC Press, 2008